(19)

Europäisches
Patentamt
European
Patent Office
Office européen
des brevets

(11) **EP 3 766 349 A1**

(12) **EUROPEAN PATENT APPLICATION**
published in accordance with Art. 153(4) EPC

(43) Date of publication:
**20.01.2021 Bulletin 2021/03**

(21) Application number: **19767675.2**

(22) Date of filing: **06.03.2019**

(51) Int Cl.:
*A01N 43/56* (2006.01)   *A01N 43/32* (2006.01)
*A01N 43/76* (2006.01)   *A01N 47/30* (2006.01)
*A01N 57/16* (2006.01)   *A01N 37/28* (2006.01)
*A01N 43/36* (2006.01)   *A01N 43/88* (2006.01)
*A01N 47/34* (2006.01)   *A01N 41/02* (2006.01)
*A01N 43/40* (2006.01)   *A01N 43/90* (2006.01)
*A01N 47/38* (2006.01)   *A01N 43/58* (2006.01)
*A01N 47/02* (2006.01)   *A01N 47/40* (2006.01)
*A01N 43/22* (2006.01)   *A01N 43/68* (2006.01)
*A01N 47/24* (2006.01)   *A01N 53/08* (2006.01)
*A01P 7/02* (2006.01)

(86) International application number:
**PCT/JP2019/008802**

(87) International publication number:
**WO 2019/176676 (19.09.2019 Gazette 2019/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.03.2018 JP 2018045236**

(71) Applicant: **Nippon Soda Co., Ltd.
Tokyo 100-8165 (JP)**

(72) Inventor: **HANAI Daisuke
Makinohara-shi, Shizuoka 421-0412 (JP)**

(74) Representative: **Mewburn Ellis LLP
Aurora Building
Counterslip
Bristol BS1 6BX (GB)**

(54) **PEST EXTERMINATION METHOD AND PEST EXTERMINATING COMPOSITION**

(57)    The present invention provides a harmful organism control method including applying 3-endo-[2-propoxy-4-(trifluoromethyl)phenoxy]-9-[5-(trifluoromethyl)-2-pyridyloxy]-9-azabicyclo[3.3.1]nonane in combination with an insecticidal or acaricidal active ingredient such as an active ingredient of an insecticidal or acaricidal agent having an action mechanism classified by the IRAC code.

EP 3 766 349 A1

**Description**

TECHNICAL FIELD

The present invention relates to a harmful organism control method and a harmful organism control composition. More specifically, the present invention relates to a method capable of controlling various harmful organisms even using a low dose without causing a safety problem, and a harmful organism control composition suitable for use in the method.
Priority is claimed on Japanese Patent Application No. 2018-045236, filed March 13, 2018, the content of which is incorporated herein by reference.

BACKGROUND ART

Patent Document 1 discloses a harmful organism control composition containing a cyclic amine compound having a specific structure and at least one selected from the group consisting of neonicotinoid compounds, organophosphorus insecticides, carbamate insecticides, synthetic pyrethroid insecticides, IGR insecticides, other insecticides/acaricides and agricultural/horticultural fungicides.

PRIOR ART LITERATURE

Patent Documents

Patent Document 1: Japanese Unexamined Patent Application, First Publication No. 2013-241352
Patent Document 2: WO2011/078081A1

DISCLOSURE OF INVENTION

Problems to be Solved by the Invention

An object of the present invention is to provide a method capable of controlling various harmful organisms even using a low dose without causing a safety problem, and a harmful organism control composition suitable for use in the method. Means for Solving the Problems
As a result of intensive research to solve the above problems, the present invention including the following aspects was completed.
That is, the present invention includes the following aspects.

[1] A harmful organism control method, comprising applying 3-endo-[2-propoxy-4-(trifluoromethyl)phenoxy]-9-[5-(trifluoromethyl)-2-pyridyloxy]-9-azabicyclo[3.3.1]nonane to an object in combination with an insecticidal or acaricidal active ingredient.
[2] The control method according to [1], wherein the insecticidal or acaricidal active ingredient is an active ingredient of an insecticidal or acaricidal agent having an action mechanism classified by the IRAC code.
[3] The control method according to [1], wherein the insecticidal or acaricidal active ingredient is at least one selected from the group consisting of (1) acetylcholinesterase inhibitor, (2) GABA-gated chloride ion channel blocker, (3) sodium channel modulator, (5) nicotinic acetylcholine receptor allosteric modulator, (6) glutamate-gated chloride ion channel allosteric modulator, (7) juvenile hormone analogs, (8) other non-specific (multi-site) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor channel blocker, (15) chitin biosynthesis inhibitor type 0, (16) chitin biosynthesis inhibitor type 1, (17) diptera insect molting inhibitor, (18) molting hormone receptor agonist, (19) octopamine receptor agonist, (20) mitochondrial electron transport chain complex III inhibitor, (21) mitochondrial electron transport chain complex I inhibitor, (22) voltage-dependent sodium channel blocker, (23) acetyl CoA carboxylase inhibitor, (24) mitochondrial electron transport chain complex IV inhibitor, (25) mitochondrial electron transport chain complex II inhibitor, (28) ryanodine receptor modulator, (29) chordotonal organ modulator, (30) GABA-gated chloride ion (chlorine ion) channel allosteric modulator, and (UN) agent with unclear action mechanism.
[4] The control method according to [1], wherein the insecticidal or acaricidal active ingredient is at least one selected from the group consisting of

alanycarb, aldicarb, bendiocarb, benfuracarb, butocarboxim, butoxycarboxim, carbaryl, carbofuran, carbosulfan, fenobucarb, formetanate, isoprocarb, methiocarb, methomyl, oxamyl, pirimicarb, propoxur, thiodicarb, thiofanox, triazamate, trimethacarb, xylylcarb, fenothiocarb, MIPC, aldoxycarb, allyxycarb, aminocarb, bufencarb, cloethocarb, promecarb;

acephate, azamethiphos, azinphos-ethyl, azinphos-methyl, cadusafos, chlorethoxyfos, chlorfenvinphos, chlormephos, chlorpyrifos, coumaphos, cyanophos, demeton-S-methyl, diazinon, dicrotophos, dimethoate, disulfoton, EPN, famphur, fenamiphos, fenitrothion, fenthion, fosthiazate, heptenophos, imicyafos, isocarbophos, isoxathion, malathion, mecarbam, methamidophos, methidathion, mevinphos, naled, omethoate, oxydemetonmethyl, parathion, parathion-methyl, phenthoate, phorate, phosmet, phosphamidon, phoxim, pirimiphos-methyl, profenofos, propetamphos, prothiofos, sulfotep, tebupirimfos, temephos, terbufos, tetrachlorvinphos, thiometon, triazophos, trichlorfon, bromophos-ethyl, carbophenothion, cyanofenphos, demeton-S-methyl sulfone, dialifos, dichlofenthion, dioxabenzofos, fensulfothion, flupyrazofos, fonofos, fosmethilan, isazofos, jodfenphos, methacrifos, pirimiphos-ethyl, phosphocarb, prothoate;

acetoprole, chlordane, endosulfan, ethiprole, fipronil, pyrafluprole, pyriprole, camphechlor, heptachlor, dienochlor;

acrinathrin, d-cis-trans-allethrin, d-trans allethrin, bifenthrin, bioallethrin, bioallethrin S-cyclopentyl isomer, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ξ-cypermethrin, cyphenothrin [(1R)-trans isomer], δ-methrin, empenthrin [(EZ)-(1R)-isomer], esfenvalerate, etofenprox, fenpropathrin, fenvalerate, flucythrinate, flumethrin, taufluvalinate, imiprothrin, kadethrin, permethrin, phenothrin [(1R)-trans isomer], prallethrin, pyrethrum, silafluofen, tefluthrin, tetramethrin, tetramethrin [(1R)-isomer], tralomethrin, transfluthrin, allethrin, pyrethrins, pyrethrin I, pyrethrin II, profluthrin, dimefluthrin, bioethanomethrin, biopermethrin, transpermethirn, fenfluthrin, fenpirithrin, flubrocythrinate, flufenprox, metofluthrin, protrifenbute, pyresmethrin, terallethrin, meperfluthrin, tetramethylfluthrin;

acetamiprid, clothianidin, dinotefuran, imidacloprid, nitenpyram, nithiazine, thiacloprid, thiamethoxam, sulfoxaflor, nicotine, flupyradifurone, triflumezopyrim;

spinetoram, spinosad;

abamectin, emamectin-benzoate, lepimectin, milbemectin, ivermectin, selamectin, doramectin, eprinomectin, moxidectin, milbemycin, milbemycin oxime;

hydroprene, kinoprene, methoprene, fenoxycarb, pyriproxyfen, diofenolan, epofenonane, triprene;

chloropicrin, sulfuryl fluoride, borax, tartar emetic, metam-sodium;

pymetrozine, pyrifluquinazon, afidopyropen;

clofentezine, diflovidazin, hexythiazox, etoxazole;

Bacillus thuringiensis subsp. Israelensis, Bacillus sphaericus, Bacillus thuringiensis subsp. Aizawai, Bacillus thuringiensis subsp. Kurstaki, Bacillus thuringiensis subsp. Tenebrionis, Bt crop protein: Cry1Ab, Cry1Ac, Cry1Fa, Cry1A. 105, Cry2Ab, Vip3A, mCry3A, Cry3Ab, Cry3Bb, Cry34Ab1/Cry35Ab1;

diafenthiuron, propargite, tetradifon;

chlorfenapyr, sulfluramid, DNOC, binapacryl, dinobuton, dinocap;

bensultap, cartap hydrochloride, nereistoxin; thiosultap-sodium, thiocyclam;

bistrifluron, chlorfluazuron, diflubenzuron, flucycloxuron, flufenoxuron, lufenuron, novaluron, noviflumuron, teflubenzuron, triflumuron, buprofezin, fluazuron;

cyromazine;

chromafenozide, halofenozide, methoxyfenozide, tebufenozide;

amitraz, demiditraz, chlordimeform;

acequinocyl, fluacrypyrim, hydramethylnon, bifenazate;

fenazaquin, fenpyroximate, pyrimidifen, pyridaben, tebufenpyrad, tolfenpyrad, rotenone;

indoxacarb, metaflumizone;

spirodiclofen, spiromesifen, spirotetramat, spiropidion;

aluminum phosphide, calcium phosphide, phosphine, zinc phosphide, cyanide;

cyenopyrafen, cyflumetofen, pyflubumide;

chlorantraniliprole, cyantraniliprole, flubendiamide, cyclaniliprole, tetraniliprole;

flonicamid;

broflanilidek, fluxametamide;

azadirachtin, pyridalyl, metaldehyde, dicyclanil, fenoxacrim, fentrifanil, flubenzimine, metoxadiazone, sodium oleate, flometoquin, flufiprole, tralopyril, methylneodecanamide, fluralaner, afoxolaner, dicloromezotiaz, and oxazosulfyl.

[5] The control method according to [1], wherein the insecticidal or acaricidal active ingredient is a hexythiazox or an etoxazole.

[6] The control method according to any one of [1] to [5], wherein the harmful organism is an insect or an acari.

[7] A harmful organism control composition, comprising 3-endo-[2-propoxy-4-(trifluoromethyl)phenoxy]-9-[5-(trifluoromethyl)-2-pyridyloxy]-9-azabicyclo[3.3.1]nonane and an insecticidal or acaricidal active ingredient.

[8] The harmful organism control composition according to [7], wherein the insecticidal or acaricidal active ingredient is an active ingredient of an insecticidal or acaricidal agent having an action mechanism classified by the IRAC code.

[9] The harmful organism control composition according to [7], wherein the insecticidal or acaricidal active ingredient is at least one selected from the group consisting of (1) acetylcholinesterase inhibitor, (2) GABA-gated chloride ion channel blocker, (3) sodium channel modulator, (5) nicotinic acetylcholine receptor allosteric modulator, (6) glutamate-gated chloride ion channel allosteric modulator, (7) juvenile hormone analogs, (8) other non-specific (multisite) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor channel blocker, (15) chitin biosynthesis inhibitor type 0, (16) chitin biosynthesis inhibitor type 1, (17) diptera insect molting inhibitor, (18) molting hormone receptor agonist, (19) octopamine receptor agonist, (20) mitochondrial electron transport chain complex III inhibitor, (21) mitochondrial electron transport chain complex I inhibitor, (22) voltage-dependent sodium channel blocker, (23) acetyl CoA carboxylase inhibitor, (24) mitochondrial electron transport chain complex IV inhibitor, (25) mitochondrial electron transport chain complex II inhibitor, (28) ryanodine receptor modulator, (29) chordotonal organ modulator, (30) GABA-gated chloride ion (chlorine ion) channel allosteric modulator, and (UN) agent with unclear action mechanism.

[10] The harmful organism control composition according to [7], wherein the insecticidal or acaricidal active ingredient is at least one selected from the group consisting of

alanycarb, aldicarb, bendiocarb, benfuracarb, butocarboxim, butoxycarboxim, carbaryl, carbofuran, carbosulfan, fenobucarb, formetanate, isoprocarb, methiocarb, methomyl, oxamyl, pirimicarb, propoxur, thiodicarb, thiofanox, triazamate, trimethacarb, xylylcarb, fenothiocarb, MIPC, aldoxycarb, allyxycarb, aminocarb, bufencarb, cloethocarb, promecarb;

acephate, azamethiphos, azinphos-ethyl, azinphos-methyl, cadusafos, chlorethoxyfos, chlorfenvinphos, chlormephos, chlorpyrifos, coumaphos, cyanophos, demeton-S-methyl, diazinon, dicrotophos, dimethoate, disulfoton, EPN, famphur, fenamiphos, fenitrothion, fenthion, fosthiazate, heptenophos, imicyafos, isocarbophos, isoxathion, malathion, mecarbam, methamidophos, methidathion, mevinphos, naled, omethoate, oxydemeton-methyl, parathion, parathion-methyl, phenthoate, phorate, phosmet, phosphamidon, phoxim, pirimiphos-methyl, profenofos, propetamphos, prothiofos, sulfotep, tebupirimfos, temephos, terbufos, tetrachlorvinphos, thiometon, triazophos, trichlorfon, bromophos-ethyl, carbophenothion, cyanofenphos, demeton-S-methyl sulfone, dialifos, dichlofenthion, dioxabenzofos, fensulfothion, flupyrazofos, fonofos, fosmethilan, isazofos, jodfenphos, methacrifos, pirimiphos-ethyl, phosphocarb, prothoate;

acetoprole, chlordane, endosulfan, ethiprole, fipronil, pyrafluprole, pyriprole, camphechlor, heptachlor, dienochlor;

acrinathrin, d-cis-trans-allethrin, d-trans allethrin, bifenthrin, bioallethrin, bioallethrin S-cyclopentyl isomer, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ξ-cypermethrin, cyphenothrin [(1R)-trans isomer], δ-methrin, empenthrin [(EZ)-(1R)-isomer], esfenvalerate, etofenprox, fenpropathrin, fenvalerate, flucythrinate, flumethrin, tau-fluvalinate, imiprothrin, kadethrin, permethrin, phenothrin [(1R)-trans isomer], prallethrin, pyrethrum, silafluofen, tefluthrin, tetramethrin, tetramethrin [(1R)-isomer], tralomethrin, transfluthrin, allethrin, pyrethrins, pyrethrin I, pyrethrin II, profluthrin, dimefluthrin, bioethanomethrin, biopermethrin, transpermethirn, fenfluthrin, fenpirithrin, flubrocythrinate, flufenprox, metofluthrin, protrifenbute, pyresmethrin, terallethrin, meperfluthrin, tetramethylfluthrin;

acetamiprid, clothianidin, dinotefuran, imidacloprid, nitenpyram, nithiazine, thiacloprid, thiamethoxam, sulfoxaflor, nicotine, flupyradifurone, triflumezopyrim;

spinetoram, spinosad;

abamectin, emamectin-benzoate, lepimectin, milbemectin, ivermectin, selamectin, doramectin, eprinomectin, moxidectin, milbemycin, milbemycin oxime;

hydroprene, kinoprene, methoprene, fenoxycarb, pyriproxyfen, diofenolan, epofenonane, triprene;

chloropicrin, sulfuryl fluoride, borax, tartar emetic, metam-sodium;

pymetrozine, pyrifluquinazon, afidopyropen;

clofentezine, diflovidazin, hexythiazox, etoxazole;

Bacillus thuringiensis subsp. Israelensis, Bacillus sphaericus, Bacillus thuringiensis subsp. Aizawai, Bacillus thuringiensis subsp. Kurstaki, Bacillus thuringiensis subsp. Tenebrionis, Bt crop protein: Cry1Ab, Cry1Ac, Cry1Fa, Cry1A. 105, Cry2Ab, Vip3A, mCry3A, Cry3Ab, Cry3Bb, Cry34Ab1/Cry35Ab1;

diafenthiuron, propargite, tetradifon;

chlorfenapyr, sulfluramid, DNOC, binapacryl, dinobuton, dinocap;

bensultap, cartap hydrochloride, nereistoxin; thiosultap-sodium, thiocyclam;

bistrifluron, chlorfluazuron, diflubenzuron, flucycloxuron, flufenoxuron, lufenuron, novaluron, noviflumuron, teflubenzuron, triflumuron, buprofezin, fluazuron;

cyromazine;

chromafenozide, halofenozide, methoxyfenozide, tebufenozide;

amitraz, demiditraz, chlordimeform;

acequinocyl, fluacrypyrim, hydramethylnon, bifenazate;

fenazaquin, fenpyroximate, pyrimidifen, pyridaben, tebufenpyrad, tolfenpyrad, rotenone;

indoxacarb, metaflumizone;

spirodiclofen, spiromesifen, spirotetramat, spiropidion;

aluminum phosphide, calcium phosphide, phosphine, zinc phosphide, cyanide;

cyenopyrafen, cyflumetofen, pyflubumide;

chlorantraniliprole, cyantraniliprole, flubendiamide, cyclaniliprole, tetraniliprole;

flonicamid;

broflanilidek, fluxametamide;

azadirachtin, pyridalyl, metaldehyde, dicyclanil, fenoxacrim, fentrifanil, flubenzimine, metoxadiazone, sodium oleate, flometoquin, flufiprole, tralopyril, methylneodecanamide, fluralaner, afoxolaner, dicloromezotiaz, and oxazosulfyl.

[11] The harmful organism control composition according to [7], wherein the insecticidal or acaricidal active ingredient is a hexythiazox or an etoxazole.

[12] The harmful organism control composition according to any one of [7] to [11], wherein the harmful organism is an insect or an acari.

Effects of the Invention

According to the harmful organism control method of the present invention, harmful organisms such as insects and acaris can be controlled more safely with a smaller dose. The harmful organism control composition of the present invention can be preferably used in a harmful organism control method, particularly in the harmful organism control method of the present invention. The harmful organism control composition of the present invention can be particularly preferably used for insecticidal and acaricidal purposes for agriculture and horticulture.

Since the harmful organism control composition of the present invention contains the compound A and the compound B in a ratio suitable for the object to be applied, it is possible to save labor for weighing each of the compound A and the compound B and mixing them. The harmful organism control composition of the present invention can be stored or transported in a bag, a bottle, a box, a can, or the like depending on the dosage form.

BEST MODE FOR CARRYING OUT THE INVENTION

The harmful organism control method of the present invention includes applying a compound A in combination with a compound B to an object.

The compound A is 3-endo-[2-propoxy-4-(trifluoromethyl)phenoxy]-9-[5-(trifluoromethyl)-2-pyridyloxy]-9-azabicyclo[3.3.1] nonan (CAS No.: 1332838-17-1, common name: acynonapyr). The compound A is a known substance and it is considered that the compound A acts on inhibitory glutamate receptors and disrupts the neurotransmission to cause behavioral abnormalities, thereby exhibiting an insecticidal or acaricidal effect. The compound A can be produced by the method described in Patent Document 2 or the like.

The compound B is an insecticidal or acaricidal active ingredient, preferably an active ingredient of an insecticidal or acaricidal agent having an action mechanism classified by the IRAC code.

Examples of the insecticidal or acaricidal agent having an action mechanism classified by the IRAC code include (1) acetylcholinesterase inhibitor, (2) GABA-gated chloride ion channel blocker, (3) sodium channel modulator, (5) nicotinic acetylcholine receptor allosteric modulator, (6) glutamate-gated chloride ion channel allosteric modulator, (7) juvenile hormone analogs, (8) other non-specific (multi-site) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor channel blocker, (15) chitin biosynthesis inhibitor type 0, (16) chitin biosynthesis inhibitor type 1, (17) diptera insect molting inhibitor, (18) molting hormone receptor agonist, (19) octopamine receptor agonist, (20) mitochondrial electron transport chain complex III inhibitor, (21) mitochondrial electron transport chain complex I inhibitor, (22) voltage-dependent sodium channel blocker, (23) acetyl CoA carboxylase inhibitor, (24) mitochondrial electron transport chain complex IV inhibitor, (25) mitochondrial electron transport chain complex II inhibitor, (28) ryanodine receptor modulator, (29) chordotonal organ modulator, (30) GABA-gated chloride ion (chlorine ion) channel allosteric modulator, and (UN) agent with unclear action mechanism.

Specific examples of the compound B are shown below.

(1) Acetylcholinesterase inhibitor: carbamate acetylcholinesterase inhibitors such as alanycarb, aldicarb, bendiocarb, benfuracarb, butocarboxim, butoxycarboxim, carbaryl, carbofuran, carbosulfan, fenobucarb, formetanate, isoprocarb, methiocarb, methomyl, oxamyl, pirimicarb, propoxur, thiodicarb, thiofanox, triazamate, trimethacarb, xylylcarb, fenothiocarb, MIPC, aldoxycarb, allyxycarb, aminocarb, bufencarb, cloethocarb, and promecarb;
Organophosphorus acetylcholinesterase inhibitors such as acephate, azamethiphos, azinphos-ethyl, azinphos-methyl, cadusafos, chlorethoxyfos, chlorfenvinphos, chlormephos, chlorpyrifos, coumaphos, cyanophos, demeton-S-methyl, diazinon, dicrotophos, dimethoate, disulfoton, EPN, famphur, fenamiphos, fenitrothion, fenthion, fosthiazate, heptenophos, imicyafos, isocarbophos, isoxathion, malathion, mecarbam, methamidophos, methidathion, mevinphos, naled, omethoate, oxydemeton-methyl, parathion, parathion-methyl, phenthoate, phorate, phosmet, phosphamidon, phoxim, pirimiphos-methyl, profenofos, propetamphos, prothiofos, sulfotep, tebupirimfos, temephos, terbufos, tetrachlorvinphos, thiometon, triazophos, trichlorfon, bromophos-ethyl, carbophenothion, cyanofenphos, demeton-S-methyl sulfone, dialifos, dichlofenthion, dioxabenzofos, fensulfothion, flupyrazofos, fonofos, fosmethilan, isazofos, jodfenphos, methacrifos, pirimiphos-ethyl, phosphocarb, prothoate;
(2) GABA-gated chloride ion channel blocker: acetoprole, chlordane, endosulfan, ethiprole, fipronil, pyrafluprole, pyriprole, camphechlor, heptachlor, dienochlor;
(3) Sodium channel modulator: acrinathrin, d-cis-trans-allethrin, d-trans allethrin, bifenthrin, bioallethrin, bioallethrin S-cyclopentyl isomer, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ξ-cypermethrin, cyphenothrin [(1R)-trans isomer], δ-methrin, empenthrin [(EZ)-(1R)-isomer], esfenvalerate, etofenprox, fenpropathrin, fenvalerate, flucythrinate, flumethrin, tau-fluvalinate, imiprothrin, kadethrin, permethrin, phenothrin [(1R)-trans isomer], prallethrin, pyrethrum, silafluofen, tefluthrin, tetramethrin, tetramethrin [(1R)-isomer], tralomethrin, transfluthrin, allethrin, pyrethrins, pyrethrin I, pyrethrin II, profluthrin, dimefluthrin, bioethanomethrin, biopermethrin, transpermethirn, fenfluthrin, fenpirithrin, flubrocythrinate, flufenprox, metofluthrin, protrifenbute, pyresmethrin, terallethrin, meperfluthrin, tetramethylfluthrin;
(4) Competitive modulator of nicotinic acetylcholine receptor: acetamiprid, clothianidin, dinotefuran, imidacloprid, nitenpyram, nithiazine, thiacloprid, thiamethoxam, sulfoxaflor, nicotine, flupyradifurone, triflumezopyrim;
(5) Nicotinic acetylcholine receptor allosteric modulator: spinetoram, spinosad;
(6) Glutamate-gated chloride ion channel allosteric modulator abamectin, emamectin-benzoate, lepimectin, milbemectin, ivermectin, selamectin, doramectin, eprinomectin, moxidectin, milbemycin, milbemycin oxime;
(7) Juvenile hormone analogs; hydroprene, kinoprene, methoprene, fenoxycarb, pyriproxyfen, diofenolan, epofenonane, triprene;
(8) Other non-specific (multi-site) inhibitors: chloropicrin, sulfuryl fluoride, borax, tartar emetic, metam-sodium;
(9) Chordotonal organ TRPV channel modulator: pymetrozine, pyrifluquinazon, afidopyropen;
(10) Acari growth inhibitor: clofentezine, diflovidazin, hexythiazox, etoxazole;
(11) Microorganism-derived insect midgut inner membrane disrupting agent: Bacillus thuringiensis subsp. Israelensis, Bacillus sphaericus, Bacillus thuringiensis subsp. Aizawai, Bacillus thuringiensis subsp. Kurstaki, Bacillus thuringiensis subsp. Tenebrionis, Bt crop protein: Cry1Ab, Cry1Ac, Cry1Fa, Cry1A. 105, Cry2Ab, Vip3A, mCry3A, Cry3Ab, Cry3Bb, Cry34Ab1/Cry35Ab1;
(12) Mitochondrial ATP synthase inhibitor: diafenthiuron, propargite, tetradifon;
(13) Oxidative phosphorylation uncoupler that disrupts proton gradient: chlorfenapyr, sulfluramid, DNOC, binapacryl, dinobuton, dinocap;
(14) Nicotinic acetylcholine receptor channel blocker: bensultap, cartap hydrochloride, nereistoxin; thiosultap-sodium, thiocyclam;
(15) Chitin biosynthesis inhibitor type 0: bistrifluron, chlorfluazuron, diflubenzuron, flucycloxuron, flufenoxuron, lufenuron, novaluron, noviflumuron, teflubenzuron, triflumuron, fluazuron;
(16) Chitin biosynthesis inhibitor type 1: buprofezin,
(17) Diptera insect molting inhibitor: cyromazine;
(18) Molting hormone receptor agonist: chromafenozide, halofenozide, methoxyfenozide, tebufenozide;
(19) Octopamine receptor agonist: amitraz, demiditraz, chlordimeform;
(20) Mitochondrial electron transport chain complex III inhibitor: acequinocyl, fluacrypyrim, hydramethylnon, bifenazate;

(21) Mitochondrial electron transport chain complex I inhibitor: fenazaquin, fenpyroximate, pyrimidifen, pyridaben, tebufenpyrad, tolfenpyrad, rotenone;

(22) Voltage-dependent sodium channel blocker: indoxacarb, metaflumizone;

(23) Acetyl CoA carboxylase inhibitor: spirodiclofen, spiromesifen, spirotetramat, spiropidion;

(24) Mitochondrial electron transport chain complex IV inhibitor: aluminum phosphide, calcium phosphide, phosphine, zinc phosphide, cyanide;

(25) Mitochondrial electron transport chain complex II inhibitor: cyenopyrafen, cyflumetofen, pyflubumide;

(28) Ryanodine receptor modulator: chlorantraniliprole, cyantraniliprole, flubendiamide, cyclaniliprole, tetraniliprole;

(29) Chordotonal organ modulator: flonicamid;

(30) GABA-gated chloride ion (chlorine ion) channel allosteric modulator: broflanilidek, fluxametamide;

(UN) agent with unclear action mechanism: azadirachtin, pyridalyl, metaldehyde, dicyclanil, fenoxacrim, fentrifanil, flubenzimine, metoxadiazone, sodium oleate, flometoquin, flufiprole, tralopyril, methylneodecanamide, fluralaner, afoxolaner, dichloromezotiaz, oxazosulfyl.

Examples of the combination of the compound A and the compound B used in the method and composition of the present invention include a combination of

acynonapyr/alanycarb, acynonapyr/aldicarb, acynonapyr/bendiocarb, acynonapyr/benfuracarb, acynonapyr/butocarboxim, acynonapyr/butoxycarboxim, acynonapyr/carbaryl, acynonapyr/carbofuran, acynonapyr/carbosulfan, acynonapyr/fenobucarb, acynonapyr/formetanate, acynonapyr/isoprocarb, acynonapyr/methiocarb, acynonapyr/methomyl, acynonapyr/oxamyl, acynonapyr/pirimicarb, acynonapyr/propoxur, acynonapyr/thiodicarb, acynonapyr/thiofanox, acynonapyr/triazamate, acynonapyr/trimethacarb, acynonapyr/xylylcarb, acynonapyr/fenothiocarb, acynonapyr/MIPC, acynonapyr/aldoxycarb, acynonapyr/allyxycarb, acynonapyr/aminocarb, acynonapyr/bufencarb, acynonapyr/cloethocarb, acynonapyr/promecarb, acynonapyr/acephate, acynonapyr/azamethiphos, acynonapyr/azinphos-ethyl, acynonapyr/azinphos-methyl, acynonapyr/cadusafos, acynonapyr/chlorethoxyfos, acynonapyr/chlorfenvinphos, acynonapyr/chlormephos, acynonapyr/chlorpyrifos, acynonapyr/coumaphos, acynonapyr/cyanophos, acynonapyr/demeton-S-methyl, acynonapyr/diazinon, acynonapyr/dicrotophos, acynonapyr/dimethoate, acynonapyr/disulfoton, acynonapyr/EPN, acynonapyr/famphur, acynonapyr/fenamiphos, acynonapyr/fenitrothion, acynonapyr/fenthion, acynonapyr/fosthiazate, acynonapyr/heptenophos, acynonapyr/imicyafos, acynonapyr/isocarbophos, acynonapyr/isoxathion, acynonapyr/malathion, acynonapyr/mecarbam, acynonapyr/methamidophos, acynonapyr/methidathion, acynonapyr/mevinphos, acynonapyr/naled, acynonapyr/omethoate, acynonapyr/oxydemeton-methyl, acynonapyr/parathion, acynonapyr/parathion-methyl, acynonapyr/phenthoate, acynonapyr/phorate, acynonapyr/phosmet, acynonapyr/phosphamidon, acynonapyr/phoxim, acynonapyr/pirimiphos-methyl, acynonapyr/profenofos, acynonapyr/propetamphos, acynonapyr/prothiofos, acynonapyr/sulfotep, acynonapyr/tebupirimfos, acynonapyr/temephos, acynonapyr/terbufos, acynonapyr/tetrachlorvinphos, acynonapyr/thiometon, acynonapyr/triazophos, acynonapyr/trichlorfon, acynonapyr/bromophos-ethyl, acynonapyr/carbophenothion, acynonapyr/cyanofenphos, acynonapyr/demeton-S-methyl sulfone, acynonapyr/dialifos, acynonapyr/dichlofenthion, acynonapyr/dioxabenzofos, acynonapyr/fensulfothion, acynonapyr/flupyrazofos, acynonapyr/fonofos, acynonapyr/fosmethilan, acynonapyr/isazofos, acynonapyr/jodfenphos, acynonapyr/methacrifos, acynonapyr/pirimiphos-ethyl, acynonapyr/phosphocarb, acynonapyr/prothoate;

acynonapyr/acetoprole, acynonapyr/chlordane, acynonapyr/endosulfan, acynonapyr/ethiprole, acynonapyr/fipronil, acynonapyr/pyrafluprole, acynonapyr/pyriprole, acynonapyr/camphechlor, acynonapyr/heptachlor, acynonapyr/dienochlor;

acynonapyr/acrinathrin, acynonapyr/d-cis-trans-allethrin, acynonapyr/d-trans allethrin, acynonapyr/bifenthrin, acynonapyr/bioallethrin, acynonapyr/bioallethrin S-cyclopentyl isomer, acynonapyr/bioresmethrin, acynonapyr/cycloprothrin, acynonapyr/cyfluthrin, acynonapyr/β-cyfluthrin, acynonapyr/cyhalothrin, acynonapyr/λ-cyhalothrin, acynonapyr/γ-cyhalothrin, acynonapyr/cypermethrin, acynonapyr/α-cypermethrin, acynonapyr/β-cypermethrin, acynonapyr/θ-cypermethrin, acynonapyr/ξ-cypermethrin, acynonapyr/cyphenothrin [(1R)-trans isomer], acynonapyr/δ-methrin, acynonapyr/empenthrin [(EZ)-(1R)-isomer], acynonapyr/esfenvalerate, acynonapyr/etofenprox, acynonapyr/fenpropathrin, acynonapyr/fenvalerate, acynonapyr/flucythrinate, acynonapyr/flumethrin, acynonapyr/tau-fluvalinate, acynonapyr/imiprothrin, acynonapyr/kadethrin, acynonapyr/permethrin, acynonapyr/phenothrin [(1R)-trans isomer], acynonapyr/prallethrin, acynonapyr/pyrethrum, acynonapyr/silafluofen, acynonapyr/tefluthrin, acynonapyr/tetramethrin, acynonapyr/tetramethrin [(1R)-isomer], acynonapyr/tralomethrin, acynonapyr/transfluthrin, acynonapyr/allethrin, acynonapyr/pyrethrins, acynonapyr/pyrethrin I, acynonapyr/pyrethrin II, acynonapyr/profluthrin, acynonapyr/dimefluthrin, acynonapyr/bioethanomethrin, acynonapyr/biopermethrin, acynonapyr/transpermethirn, acynonapyr/fenfluthrin, acynonapyr/fenpirithrin, acynonapyr/flubrocythrinate, acynonapyr/flufenprox, acynonapyr/metofluthrin, acynonapyr/protrifenbute, acynonapyr/pyresmethrin, acynonapyr/terallethrin, acynonapyr/meperfluthrin, acynonapyr/tetramethylfluthrin;

acynonapyr/acetamiprid, acynonapyr/clothianidin, acynonapyr/dinotefuran, acynonapyr/imidacloprid, acynonapyr/nitenpyram, acynonapyr/nithiazine, acynonapyr/thiacloprid, acynonapyr/thiamethoxam, acynonapyr/sulfoxaflor, acynonapyr/nicotine, acynonapyr/flupyradifurone, acynonapyr/triflumezopyrim;

acynonapyr/spinetoram, acynonapyr/spinosad;

acynonapyr/abamectin, acynonapyr/emamectin-benzoate, acynonapyr/lepimectin, acynonapyr/milbemectin, acynonapyr/ivermectin, acynonapyr/selamectin, acynonapyr/doramectin, acynonapyr/eprinomectin, acynonapyr/moxidectin, acynonapyr/milbemycin, acynonapyr/milbemycin oxime;

acynonapyr/hydroprene, acynonapyr/kinoprene, acynonapyr/methoprene, acynonapyr/fenoxycarb, acynonapyr/pyriproxyfen, acynonapyr/diofenolan, acynonapyr/epofenonane, acynonapyr/triprene;

acynonapyr/chloropicrin, acynonapyr/sulfuryl fluoride, acynonapyr/borax, acynonapyr/tartar emetic, acynonapyr/metam-sodium;

acynonapyr/pymetrozine, acynonapyr/pyrifluquinazon, acynonapyr/afidopyropen;

acynonapyr/clofentezine, acynonapyr/diflovidazin, acynonapyr/hexythiazox, acynonapyr/etoxazole;

acynonapyr/Bacillus thuringiensis subsp. Israelensis, acynonapyr/Bacillus sphaericus, acynonapyr/Bacillus thuringiensis subsp. Aizawai, acynonapyr/Bacillus thuringiensis subsp. Kurstaki, acynonapyr/Bacillus thuringiensis subsp. Tenebrionis, acynonapyr/Bt crop protein: Cry1Ab, Cry1Ac, Cry1Fa, Cry1A. 105, Cry2Ab, Vip3A, mCry3A, Cry3Ab, Cry3Bb, Cry34Ab1/Cry35Ab1;

acynonapyr/diafenthiuron, acynonapyr/propargite, acynonapyr/tetradifon;

acynonapyr/chlorfenapyr, acynonapyr/sulfluramid, acynonapyr/DNOC, acynonapyr/binapacryl, acynonapyr/dinobuton, acynonapyr/dinocap;

acynonapyr/bensultap, acynonapyr/cartap hydrochloride, acynonapyr/nereistoxin; thiosultap-sodium, acynonapyr/thiocyclam;

acynonapyr/bistrifluron, acynonapyr/chlorfluazuron, acynonapyr/diflubenzuron, acynonapyr/flucycloxuron, acynonapyr/flufenoxuron, acynonapyr/lufenuron, acynonapyr/novaluron, acynonapyr/noviflumuron, acynonapyr/teflubenzuron, acynonapyr/triflumuron, acynonapyr/buprofezin, acynonapyr/fluazuron;

acynonapyr/cyromazine;

acynonapyr/chromafenozide, acynonapyr/halofenozide, acynonapyr/methoxyfenozide, acynonapyr/tebufenozide, acynonapyr/amitraz, acynonapyr/demiditraz, acynonapyr/chlordimeform;

acynonapyr/acequinocyl, acynonapyr/fluacrypyrim, acynonapyr/hydramethylnon, acynonapyr/bifenazate;

acynonapyr/fenazaquin, acynonapyr/fenpyroximate, acynonapyr/pyrimidifen, acynonapyr/pyridaben, acynonapyr/tebufenpyrad, acynonapyr/tolfenpyrad, acynonapyr/rotenone;

acynonapyr/indoxacarb, acynonapyr/metaflumizone;

acynonapyr/spirodiclofen, acynonapyr/spiromesifen, acynonapyr/spirotetramat, acynonapyr/spiropidion;

acynonapyr/aluminum phosphide, acynonapyr/calcium phosphide, acynonapyr/phosphine, acynonapyr/zinc phosphide, acynonapyr/cyanide;

acynonapyr/cyenopyrafen, acynonapyr/cyflumetofen, acynonapyr/pyflubumide;

acynonapyr/chlorantraniliprole, acynonapyr/cyantraniliprole, acynonapyr/flubendiamide, acynonapyr/cyclaniliprole, acynonapyr/tetraniliprole;

acynonapyr/flonicamid;

acynonapyr/broflanilidek, acynonapyr/fluxametamide;

acynonapyr/azadirachtin, acynonapyr/pyridalyl, acynonapyr/metaldehyde, acynonapyr/dicyclanil, acynonapyr/fenoxacrim, acynonapyr/fentrifanil, acynonapyr/flubenzimine, acynonapyr/metoxadiazone, acynonapyr/sodium oleate, acynonapyr/flometoquin, acynonapyr/flufiprole, acynonapyr/tralopyril, acynonapyr/methylneodecanamide, acynonapyr/fluralaner, acynonapyr/afoxolaner, acynonapyr/dicloromezotiaz, or acynonapyr/oxazosulfyl.

Among these examples, from the viewpoint of easy availability, the combination is preferably a combination of acynonapyr/tebufenpyrad, acynonapyr/hexythiazox, acynonapyr/fenpyroximate, acynonapyr/propargite, acynonapyr/tolfenpyrad, acynonapyr/abamectin, acynonapyr/etoxazole, acynonapyr/spinosad, acynonapyr/isoxathion, acynonapyr/acetamiprid, acynonapyr/fipronil, acynonapyr/tralomethrin, acynonapyr/BT agent, acynonapyr/buprofezin, acynonapyr/cyromazine, acynonapyr/tebufenozide, acynonapyr/flubendiamide, acynonapyr/pyridalyl, acynonapyr/lufenuron, acynonapyr /flonicamid, acynonapyr/chlorfenapyr, acynonapyr/indoxacarb, acynonapyr/diafenthiuron, acynonapyr/thiocyclam, acynonapyr/emamectin benzoate, or acynonapyr/pyridazine.

Particularly, the combinations of acynonapyr/hexythiazox, and acynonapyr/etoxazole are preferable.

Although the mass ratio of the compound A to the compound B (compound A/compound B) used in the method of the present invention is not particularly limited, it is preferably 200/1 to 1/200, more preferably 1/1 to 1/200, and even more preferably 1/1 to 1/10.

It is preferable to apply the components A an B at a mass ratio that exhibits a synergistic effect. The synergistic effect can be confirmed by the Colby method described later.

In the method of the present invention, the compound A may be applied first, followed by the compound B, or the compound B may be applied first, followed by the compound A, or the compound A and the compound B may be applied simultaneously, or the compound A and the compound B may be mixed and then applied.

In the method of the present invention, in addition to the compound A and the compound B, an active ingredient (hereinafter, refered to as compound C) contained in other agents described later, such as fungicides, plant growth regulators, synergists, fertilizers, soil improvers, animal feeds and the like, may be applied. The order of application is not particularly limited, and for example, the compounds A, B and C can be applied in the order of the compound A, the compound B, the compound C, in the order of the compound A, the compound C, the compound B, in the order of the compound C, the compound A, the compound B, in the order of the compound C, the compound B, the compound A, in the order of the compound B, the compound C, the compound A, in the order of the compound B, the compound A, the compound C, or the compound A, the compound B and the compound C may be applied simultaneously.

Although the compound A may be applied as it is, it is preferable that the comound A be applied in the form of a composition containing the compound A (chemical composition A). Although the compound B may be applied as it is, it is preferable that the comound B be applied in the form of a composition containing the compound B (chemical composition B). The compound C may be applied as it is, or applied in the form of a composition containing the compound C (chemical composition C).

Each of the chemical composition A, chemical composition B and the chemical composition C may be formulated into a known form. For example, by formulation, it may be made into forms that are used for the general agricultural chemicals or animal drugs, such as wettable powder, granule, powder, tablet, emulsion, water-soluble agent, suspension, granule wettable powder, flowable agent, microcapsule, aerosol, propellant, spray, fogging agent, heating transpiration agent, smoking agent, baiting agent or the like. Further, it may be a form that is obtained by impregnating a base material such as a porous ceramic plate, a non-woven fabric, paper or the like with the compound A, compound B and/or the compound C.

Although the amount of the compound A contained in the chemical composition A, the amount of the compound B contained in the chemical composition B, and the amount of the compound C contained in the chemical composition C are not particularly limited, each of the amounts is usually 0.1 to 80% by mass with respect to the chemical composition A, the chemical composition B and the chemiccal composition C respectively. The amounts of the compound A, compound B and the compound C in the chemical composition A, chemical composition B and the chemical composition C having a dosage form of emulsion, liquid agent, wettable powder (for example, granular wettable powder), aqueous suspension preparation, microemulsion or the like are each preferably 1 to 80% by mass, and more preferably 10 to 50% by mass with respect to the chemical composition A, chemical composition B and the chemical composition C; the amounts of the compound A, compound B and the compound C in the chemical composition A, chemical composition B and the chemical composition C having a dosage form of oil, powder or the like are each preferably 0.1 to 50% by mass, and more preferably 0.1 to 20% by mass with respect to the chemical composition A, chemical composition B and the chemical composition C; and the amounts of the compound A, compound B and the compound C in the chemical composition A, chemical composition B and the chemical composition C having a dosage form of granule, tablet, jumbo agent or the like are each preferably 0.5 to 50% by mass, and more preferably 0.5 to 10% by mass with respect to the chemical composition A, chemical composition B and the chemical composition C.

Each of the chemical composition A, chemical composition B and the chemical composition C may contain, in addition to the compound A, compound B and the compound C, a liquid medium, a base material, an additive and/or a carrier described later.

When the compound A and the compound B (and optionally the compound C) are applied at the same time, it is preferable to prepare a composition (harmful orgamism control composition of the present invention) containing the compound A and the compound B (optionally, and the compound C) to apply it.

Although the total amount of the compound A and the compound B (and optionally the compound C) contained in the harmful organism control composition of the present invention is slightly different depending on the dosage form, it is usually 0.1 to 80% by mass. The total amount of the compound A and the compound B (optionally, and the compound C) in the harmful organism control composition having a dosage form of emulsion, liquid agent, wettable powder (for example, granular wettable powder), aqueous suspension preparation, microemulsion or the like is preferably 1 to 80% by mass, and more preferably 10 to 50% by mass with respect to the harmful organism control composition. The total amount of the compound A and the compound B (optionally, and the compound C) in the harmful organism control composition having a dosage form of oil, powder or the like is preferably 0.1 to 50% by mass, and more preferably approximately 0.1 to 20% by mass with respect to the harmful organism control composition. The total amount of the compound A and the compound B (optionally, and the compound C) in the harmful organism control composition having a dosage form of granule, tablet, jumbo agent or the like is preferably 0.5 to 50% by mass, and more preferably approximately 0.5 to 10% by mass with respect to the harmful organism control composition.

In the harmful organism control composition of the present invention, although the mass ratio of the compound A to the compound B (compound A/compound B) is not particularly limited, it is preferably 200/1 to 1/200, more preferably 1/1 to 1/200, even more preferably 1/1 to 1/10. In particular, it is preferable to contain them in a mass ratio that exhibits a synergistic effect. The synergistic effect can be confirmed by the Colby method described later.

The harmful organism control composition of the present invention may contain a liquid medium, a base material, an additive and/or a carrier in addition to the compound A, compound B and the compound C. The liquid medium, base material, additive and/or carrier that can be used in the present invention can be appropriately selected from the conventionally known substances according to the dosage form.

Examples of the additive and carrier that can be used in solid formulations include plant powders such as soybean flour, wheat flour or the like, mineral fine powders such as diatomaceous earth, apatite, gypsum, talc, bentonite, pyrophyllite, clay or the like, organic and inorganic compounds such as sodium benzoate, urea, mirabilite or the like, and the like.

Examples of the liquid medium that can be used in liquid formulation include petroleum-based aromatic hydrocarbons such as kerosene, xylene or the like, cyclohexane, cyclohexanone, dimethylformamide, dimethyl sulfoxide, alcohol, acetone, trichloroethylene, methyl isobutyl ketone, mineral oil, plant oil, water etc and the like.

Examples of the carrier that can be used when formulating into a propellant include butane gas, LPG, dimethyl ether, carbon dioxide gas and the like.

Examples of the base material that can be used for poison baits include bait ingredients such as cereal flour, vegetable oil, sugar, crystalline cellulose or the like; antioxidants such as dibutylhydroxytoluene, nordihydroguaiaretic acid or the like; preservatives such as dehydroacetic acid or the like; accidental ingestion preventive agent for children and pets such as red pepper powder or the like; pest-attracting flavors such as cheese flavor, onion flavor or the like, and the like.

Examples of the additive include a surfactant. Examples of the surfactant include nonionic surfactants such as alkyl phenyl ether with polyoxyethylene added, alkyl ether with polyoxyethylene added, higher fatty acid ester with polyoxyethylene added, sorbitan higher fatty acid ester with polyoxyethylene added, tristyryl phenyl ether with polyoxyethylene added, alkyl phenyl ether sulfate ester salt with polyoxyethylene added, alkylbenzene sulfonate, sulfate ester salt of higher alcohol, alkyl naphthalene sulfonate, polycarboxylic acid salt, lignin sulfonate, formaldehyde condensate of alkylnaphthalene sulfonate, isobutylene-maleic anhydride copolymer and the like.

Examples of the active ingredient of the bactericide include those exemplified in the action mechanism classification of the bactericide based on FRAC. Specifically, the following active ingredients can be mentioned.

(1) Nucleic acid biosynthesis inhibitors:

(a) RNA polymerase 1 inhibitors: benalaxyl, benalaxyl-M, furalaxyl, metalaxyl, metalaxyl-M, clozylacon, ofurace;
(b) Adenosine deaminase inhibitors: bupirimate, ethirimol;
(c) DNA/RNA synthesis inhibitors: hymexazol, octhilinone;
(d) DNA topoisomerase type II (gyrase) inhibitor: oxolinic acid.

(2) Mitotic inhibitors and cell division inhibitors:

(a) β-tubulin polymerization inhibitors: benomyl, carbendazim, chlorfenazole, fuberidazole, thiophanate-methyl, diethofencarb, zoxamide, ethaboxam;
(b) Cell division inhibitor: pencycuron;
(c) Delocalization inhibitor of spectrin-like proteins: fluopicolide.

(3) Respiration inhibitors:

(a) Complex 1: NADH oxidoreductase inhibitors: diflumetorim;
(b) Complex II: succinic acid dehydrogenase inhibitors: benodanil, flutolanil, mepronil, isofetamid, fluopyram, fenfuram, furmecyclox, carboxin, thifluzamide, benzovindiflupyr, bixafen, fluxapyroxad, furametpyr, isopyrazam, penflufen, penthiopyrad, sedaxane, boscalid;
(c) Complex III: cytochrome bc1 (ubiquinol oxidase) Qo (cyt b gene) inhibitors: azoxystrobin, coumoxystrobin, coumethoxystrobin, enoxastrobin, flufenoxystrobin, picoxystrobin, pyraoxystrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb;
(d) Complex III: ubiquinone reductase Qi site inhibitors: cyazofamid, amisulbrom;
(e) Oxidative phosphorylation uncoupling agents: meptyldinocap, fluazinam, ferimzone;
(f) ATP synthase inhibitors: silthiofam;
(g) Complex III: ubiquinone reductase (Qo site, stigmaterin-binding subsite) inhibitor: ametoctradin.

(4) Amino acid and protein synthesis inhibitors

(a) Methionine biosynthesis (cgs gene) inhibitors: andoprim, cyprodinil, mepanipyrim;
(b) Protein synthesis inhibitors: kasugamycin, kasugamycin hydrochloride, streptomycin, oxytetracycline.

(5) Signal transduction inhibitors:

(a) Signal transduction inhibitors: quinoxyfen, proquinazid;
(b) MAP/histidine kinase inhibitors (os-2, HOG1) in osmotic pressure signal transduction: fenpiclonil, fludioxonil;
(c) MAP/histidine kinase inhibitors (os-1, Daf1) in osmotic pressure signal transduction: chlozolinate, iprodione, procymidone.

(6) Lipid and cell membrane synthesis inhibitors:

(a) Phospholipid biosynthesis and methyltransferase inhibitors: edifenphos, iprobenfos, isoprothiolane;
(b) Lipid peroxidation agents: biphenyl, dichloran, quintozene, tecnazene, tolclofos-methyl, etridiazole;
(c) Agents that act upon cell membranes (substance that exerts its effect by acting on the cell membrane and causing leakage of cell contents): iodocarb, propamocarb, propamocarb-hydrochloride, propamocarb-fosetylate, prothiocarb;
(d) Microorganisms that disturb pathogen cell membranes: Bacillus subtilis, Bacillus subtilis strain QST713, Bacillus subtilis strain FZB24, Bacillus subtilis strain MB1600, Bacillus subtilis strain D747;
(e) Agents that disturb cell membranes: Melaleuca alternifolia (tea tree) extract;
(f) Oxysterol binding protein inhibitor: oxathiapiproline.

(7) Cell membrane sterol biosynthesis inhibitors:

(a) C14 position demethylase (erg11/cyp51) inhibitors in sterol biosynthesis: triforine, pyrisoxazole, fenarimol, flurprimidol, nuarimol, imazalil, imazalil-sulfate, oxpoconazole, pefurazoate, prochloraz, triflumizole, viniconazole, azaconazole, bitertanol, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, penconazole, propiconazole, fluquinconazole, simeconazole, tebuconazole, tetraconazole, triadimefon, triadimenol, triticonazole, prothioconazole, voriconazole;
(b) Δ14 reductase and Δ8→Δ7-isomerase (erg24, erg2) inhibitors in sterol biosynthesis: aldimorph, dodemorph, dodemorph acetate, fenpropimorph, tridemorph; fenpropidin, piperalin, spiroxamine;
(c) 3-keto reductase (erg27) inhibitors in C4-position demethylation in sterol biosynthesis systems: fenhexamid, fenpyrazamine;
(d) Squalene epoxidase (erg1) inhibitors in sterol biosynthesis systems: pyributicarb, naftifene, terbinafine.

(8) Cell wall synthesis inhibitors:

(a) Chitin synthase inhibitors: polyoxins, polyoxorim;
(b) Cellulose synthase inhibitors: dimethomorph, flumorph, pyrimorph, benthiavalicarb, iprovalicarb, valifenalate, mandipropamide.

(9) Melanin biosynthesis inhibitors:

(a) Reductase inhibitors in melanin biosynthesis: fthalide, pyroquilon, tricyclazole;
(b) Anhydrase inhibitors in melanin biosynthesis: diclocymet, fenoxanil;
(c) Inhibitor of polyketide synthase for melanin biosynthesis: torprocarb.

(10) Active ingredient of host plant resistance-inducing agents:
Probenazole, tiadinil, isotianil, laminarin, Reynoutria sachalinensis extract.
(11) Agents for which the mode of activity is unclear: cymoxanil, fosetyl-aluminum, phosphoric acid (phosphate), triazoxide, flusulfamide, cyflufenamid, metrafenone, pyriofenone, dodine, dodine free base, flutianil.
(12) Agents having multiple activities: copper (copper salts), bordeaux mixture, copper hydroxide, copper naphthalate, copper oxide, copper oxychloride, copper sulfate, sulfur, sulfur products, calcium polysulfide, ferbam, mancozeb, maneb, mancopper, metiram, polycarbamate, propineb, thiram, ziram, captan, captafol, folpet, chlorothalonil, dichlofluanid, tolylfluanid, guazatine, iminoctadine triacetate, iminoctadine trialbesilate, anilazine, dithianon, quinomethionate, fluoroimide.
(13) Other agents: DBEDC, fluorofolpet, guazatine acetate, bis(8-quinolinolato) copper(II), propamidine, cyprofuram, agrobacterium, bethoxazin, diphenylamine, methyl isothiocyanate (MITC), capsaicin, curfraneb, cyprosulfamide, debacarb, dichlorophen, flumetover, fosetyl-calcium, fosetyl-sodium, irumamycin, nitrothal-isopropyl, oxamocarb, puropamocin sodium, pyrrolnitrin, tebufloquin, tolnifanide, zarilamide, Algophase, amicarthiazol, metiram-zinc, trichlamide, uniconazole, oxyfenthiin, picarbutrazox, chinomethionat, ipflufenoquin.

Examples of the active ingredient of the plant growth regulators include the following:

kinetin, benzylaminopurine, 1,3-diphenylurea, forchlorfenuron, thidiazuron, chlorfenuron, dihydrozeatin, gibberellin A, gibberellin A4, gibberellin A7, gibberellin A3, 1-methylcyclopropane, N-acetyl aminoethoxyvinylglycine (alternative name: aviglycine), aminooxyacetate, silver nitrate, cobalt chloride, IAA, 4-CPA, cloprop, 2,4-D, MCPB, indole-3-butyric acid, dichlorprop, phenothiol, 1-naphthylacetamide, ethychlozate, salicylic acid, methyl salicylate, (-)-jasmonic acid, methyl jasmonate, (+)-strigol, (+)-deoxystrigol, (+)-orobanchol, (+)-sorgolactone, 4-oxo-4-(2-phenylethyl)aminobutyric acid, ethephon, chlormequat, mepiquat chloride, benzyl adenine, and 5-aminolevulinic acid.

The method of applying the pharmaceutical composition A, the pharmaceutical composition B and the pharmaceutical composition C is not particularly limited. For example, in the case of a chemical composition having a dosage form such as a wettable powder, emulsion, flowable agent, water-soluble agent and a granular wettable powder, the chemical composition can be applied by diluting it with water to a predetermined concentration for a solution, suspension or emulsion, and spraying it on plants or soil. In the case of a chemical composition having a dosage form such as a powder or granule formulation, the chemical composition can be applied by scattering it on plants or soil. In the case of a chemical composition having a dosage form such as a poison bait or anti-acari sheet, the chemical composition can be applied by placing or suspending it in a desired place. In the case of a chemical composition having a dosage form such as an aerosol or fogging agent, the chemical composition can be applied using a device such as a spray.

Furthermore, the chemical composition can also be applied by known veterinary methods (topical, oral, parenteral or subcutaneous administration). Examples of the method therefor include a method of orally administering to an animal by tablet, capsule, feed mix or the like; a method of administering to an animal by immersion liquid, suppository, injection (intramuscular, subcutaneous, intravenous, intraperitoneal, etc.); a method of locally administering an oily or aqueous liquid formulation by spraying, pour-on, spot-on or the like; a method of kneading an ectoparasite control agent in a resin, shaping the kneaded product into a suitable shape such as a collar, an ear tag or the like, attaching it to an animal and locally administering it; and the like.

The applying amount to the object is not particularly limited, and can be set appropriately according to the type of the object to be controlled, the time of control or the like. For example, in order to control acaris that parasitize domestic animals such as cattle and pigs, and pets such as dogs and cats, the compound A and the compound B may be applied in a total amount of 0.01 to 1000 mg per 1 kg of the host animal.

Examples of the object of application include cereals; vegetables; root vegetables; potatoes; trees such as fruit trees, tea, coffee, cocoa or the like; grasses; lawn grasses; flowers; ornamental plants; plants such as cotton or the like, and the like. The plant to be applied is not limited by the original species, varieties, improved varieties, cultivars, mutants, hybrids, genetically modified organisms (GMO) and the like. In the method of the present invention, it may be applied to the entire plants, or to a part of the plants such as leaves, stems, stalks, flowers, buds, fruits, seeds, sprouts, roots, tubers, root tubers, shoots, cuttings and the like. In order to control various agricultural pests and acaris, seed treatment, foliar application, soil application, water application and the like can be performed.

In addition, the object of application may be a host animal of ectoparasites; pets such as dogs and cats; pet birds; livestock such as cows, horses, pigs, sheep or the like; warm-blooded animals such as poultry; insects such as bees, stag beetles and beetles.

The harmful organisms that can be controlled by the control method of the present invention are not particularly limited. Examples thereof include sanitary pests, storage shell pests, clothing pests, house pests, parasites, crop pests and the like. These pests include acaris.

The control method of the present invention can be carried out at all development stages of the harmful organisms to be controlled. For example, the method of the present invention can be performed on eggs, nymphs, larvae, pupae, and adults.

Examples of the harmful organisms to be controlled are shown below.

(1) Lepidoptera Butterflies and Moths

(1-a) Arctiidae moths, for example, Hyphantria cunea and Lemyra imparilis;
(1-b) Bucculatricidae moths, for example, Bucculatrix pyrivorella;
(1-c) Carposinidae, for example, Carposina sasakii;
(1-d) Crambidae moths, for example, Diaphania indica and Diaphania nitidalis of Diaphania spp.; Ostrinia furnacalis, Ostrinia nubilalis and Ostrinia scapulalis of Ostrinia spp.; and others such as Chilo suppressalis, Cnaphalocrocis medinalis, Conogethes punctiferalis, Diatraea grandiosella, Glyphodes pyloalis, Hellula undalis and Parapediasia teterrella;

(1-e) Gelechiidae moths, for example, Helcystogramma triannulella, Pectinophora gossypiella, Phthorimaea operculella and Sitotroga cerealella;

(1-f) Geometridae moths, for example, Ascotis selenaria;

(1-g) Gracillariidae moths, for example, Caloptilia theivora, Phyllocnistis citrella and Phyllonorycter ringoniella;

(1-h) Hesperiidae butterflies, for example, Parnara guttata;

(1-i) Lasiocampidae moths, for example, Malacosoma neustria;

(1-j) Lymantriidae moths, for example, Lymantria dispar and Lymantria monacha of Lymantria spp.; and others such as Euproctis pseudoconspersa and Orgyia thyellina;

(1-k) Lyonetiidae moths, for example, Lyonetia clerkella and Lyonetia prunifoliella malinella of Lyonetia spp.;

(1-1) Noctuidae moths, for example, Spodoptera depravata, Spodoptera eridania, Spodoptera exigua, Spodoptera frugiperda, Spodoptera littoralis and Spodoptera litura of Spodoptera spp.; Autographa gamma and Autographa nigrisigna of Autographa spp.; Agrotis ipsilon and Agrotis segetum of Agrotis spp.; Helicoverpa armigera, Helicoverpa assulta and Helicoverpa zea of Helicoverpa spp.; Heliothis armigera and Heliothis virescens of Heliothis spp.; and others such as Aedia leucomelas, Ctenoplusia agnata, Eudocima tyrannus, Mamestra brassicae, Mythimna separata, Naranga aenescens, Panolis japonica, Peridroma saucia, Pseudoplusia includens and Trichoplusiani;

(1-m) Nolidae moths, for example, Earias insulana;

(1-n) Pieridae butterflies, for example, Pieris brassicae and Pieris rapae crucivora of Pieris spp.;

(1-o) Plutellidae moths, for example, Acrolepiopsis sapporensis and Acrolepiopsis suzukiella of Acrolepiopsis spp.; and others such as Plutella xylostella; (1-p) Pyralidae moths, for example, Cadra cautella, Elasmopalpus lignosellus, Etiella zinckenella and Galleria mellonella;

(1-q) Sphingidae moths, for example, Manduca quinquemaculata and Manduca sexta of Manduca spp.;

(1-r) Stathmopodidae moths, for example, Stathmopoda masinissa;

(1-s) Tineidae moths, for example, Tinea translucens;

(1-t) Tortricidae moths, for example, Adoxophyes honmai and Adoxophyes orana of Adoxophyes spp.; Archips breviplicanus and Archips fuscocupreanus of Archips spp.; and others such as Choristoneura fumiferana, Cydia pomonella, Eupoecilia ambiguella, Grapholitha molesta, Homona magnanima, Leguminivora glycinivorella, Lobesia botrana, Matsumuraeses phaseoli, Pandemis heparana and Sparganothis pilleriana; and (1-u) Yponomeutidae moths, for example, Argyresthia conjugella.

(2) Thysanoptera Pests

(2-a) Phlaeothripidae, for example, Ponticulothrips diospyrosi; and

(2-b) Thripidae, for example, Frankliniella intonsa and Frankliniella occidentalis of Frankliniella spp.; Thrips palmi and Thrips tabaci of Thrips spp.; and others such as Heliothrips haemorrhoidalis and Scirtothrips dorsalis.

(3) Hemiptera Pests

(3-A) Archaeorrhyncha

(3-A-a) Delphacidae, for example, Laodelphax striatella, Nilaparvata lugens, Perkinsiella saccharicida and Sogatella furcifera.

(3-B) Clypeorrhyncha

(3-B-a) Cicadellidae, for example, Empoasca fabae, Empoasca nipponica, Empoasca onukii and Empoasca sakaii of Empoasca spp.; and others such as Arboridia apicalis, Balclutha saltuella, Epiacanthus stramineus, Macrosteles striifrons and Nephotettix cinctinceps.

(3-C) Heteroptera

(3-C-a) Alydidae, for example, Riptortus clavatus;

(3-C-b) Coreidae, for example, Cletus punctiger and Leptocorisa chinensis;

(3-C-c) Lygaeidae, for example, Blissus leucopterus, Cavelerius saccharivorus and Togo hemipterus;

(3-C-d) Miridae, for example, Halticus insularis, Lygus lineolaris, Psuedatomoscelis seriatus, Stenodema sibiricum, Stenotus rubrovittatus and Trigonotylus caelestialium;

(3-C-e) Pentatomidae, for example, Nezara antennata and Nezara viridula of Nezara spp.; Eysarcoris aeneus, Eysarcoris lewisi and Eysarcoris ventralis of Eysarcoris spp.; and others such as Dolycoris baccarum, Eurydema rugosum, Glaucias subpunctatus, Halyomorpha halys, Piezodorus hybneri, Plautia crossota and Scotinophora lurida;

(3-C-f) Pyrrhocoridae, for example, Dysdercus cingulatus;

(3-C-g) Rhopalidae, for example, Rhopalus msculatus;

(3-C-h) Scutelleridae, for example, Eurygaster integriceps; and

(3-C-i) Tingidae, for example, Stephanitis nashi.

(3-D) Sternorrhyncha

(3-D-a) Adelgidae, for example, Adelges laricis;

(3-D-b) Aleyrodidae, for example, Bemisia argentifolii and Bemisia tabaci of Bemisia spp.; and others such as Aleurocanthus spiniferus, Dialeurodes citri and Trialeurodes vaporariorum;

(3-D-c) Aphididae, for example, Aphis craccivora, Aphis fabae, Aphis forbesi, Aphis gossypii, Aphis pomi, Aphis sambuci and Aphis spiraecola of Aphis spp.; Rhopalosiphum maidis and Rhopalosiphum padi of Rhopalosiphum spp.; Dysaphis plantaginea and Dysaphis radicola of Dysaphis spp.; Macrosiphum avenae and Macrosiphum euphorbiae of Macrosiphum spp.; Myzus cerasi, Myzus persicae and Myzus varians of Myzus spp.; and others such as Acyrthosiphon pisum, Aulacorthum solani, Brachycaudus helichrysi, Brevicoryne brassicae, Chaetosiphon fragaefolii, Hyalopterus pruni, Hyperomyzus lactucae, Lipaphis erysimi, Megoura viciae, Metopolophium dirhodum, Nasonovia ribis-nigri, Phorodon humuli, Schizaphis graminum, Sitobion avenae and Toxoptera aurantii;

(3-D-d) Coccidae, for example, Ceroplastes ceriferus and Ceroplastes rubens of Ceroplastes spp.;

(3-D-e) Diaspididae, for example, Pseudaulacaspis pentagona and Pseudaulacaspis prunicola of Pseudaulacaspis spp.; Unaspis euonymi and Unaspis yanonensis of Unaspis spp.; and others such as Aonidiella aurantii, Comstockaspis perniciosa, Fiorinia theae and Pseudaonidia paeoniae;

(3-D-f) Margarodidae, for example, Drosicha corpulenta and Icerya purchasi; (3-D-g) Phylloxeridae, for example, Viteus vitifolii;

(3-D-h) Pseudococcidae, for example, Planococcus citri and Planococcus kuraunhiae of Planococcus spp.; and others such as Phenacoccus solani and Pseudococcus comstocki; and

(3-D-i) Psyllidae, for example, Psylla mali and Psylla pyrisuga of Psylla spp.; and others such as Diaphorina citri.

(4) Coleoptera Pests

(4-a) Anobiidae, for example, Lasioderma serricorne;

(4-b) Attelabidae, for example, Byctiscus betulae and Rhynchites heros;

(4-c) Bostrichidae, for example, Lyctus brunneus;

(4-d) Brentidae, for example, Cylas formicarius;

(4-e) Buprestidae, for example, Agrilus sinuatus;

(4-f) Cerambycidae, for example, Anoplophora malasiaca, Monochamus alternatus, Psacothea hilaris and Xylotrechus pyrrhoderus;

(4-g) Chrysomelidae, for example, Bruchus pisorum and Bruchus rufimanus of Bruchus spp.; Diabrotica barberi, Diabrotica undecimpunctata and Diabrotica virgifera of Diabrotica spp.; Phyllotreta nemorum and Phyllotreta striolata of Phyllotreta spp.; and others such as Aulacophora femoralis, Callosobruchus chinensis, Cassida nebulosa, Chaetocnema concinna, Leptinotarsa decemlineata, Oulema oryzae and Psylliodes angusticollis;

(4-h) Coccinellidae, for example, Epilachna varivestis and Epilachna vigintioctopunctata of Epilachna spp.;

(4-i) Curculionidae, for example, Anthonomus grandis and Anthonomus pomorum of Anthonomus spp.; Sitophilus granarius and Sitophilus zeamais of Sitophilus spp.; and others such as Echinocnemus squameus, Euscepes postfasciatus, Hylobius abietis, Hypera postica, Lissohoptrus oryzophilus, Otiorhynchus sulcatus, Sitona lineatus and Sphenophorus venatus;

(4-j) Elateridae, for example, Melanotus fortnumi and Melanotus tamsuyensis of Melanotus spp.;

(4-k) Nitidulidae, for example, Epuraea domina;

(4-1) Scarabaeidae, for example, Anomala cuprea and Anomala rufocuprea of Anomala spp.; and others such as Cetonia aurata, Gametis jucunda, Heptophylla picea, Melolontha and Popillia japonica;

(4-m) Scolytidae, for example, Ips typographus;

(4-n) Staphylinidae, for example, Paederus fuscipes;

(4-o) Tenebrionidae, for example, Tenebrio molitor and Tribolium castaneum; and (4-p) Trogossitidae, for example, Tenebroides mauritanicus.

(5) Diptera Pests

(5-A) Brachycera

(5-A-a) Agromyzidae, for example, Liriomyza bryoniae, Liriomyza chinensis, Liriomyza sativae and Liriomyza trifolii of Liriomyza spp.; and others such as Chromatomyia horticola and Agromyza oryzae;
(5-A-b) Anthomyiidae, for example, Delia platura and Delia radicum of Delia spp.; and others such as Pegomya cunicularia;
(5-A-c) Drosophilidae, for example, Drosophila melanogaster and Drosophila suzukii of Drosophila spp.;
(5-A-d) Ephydridae, for example, Hydrellia griseola;
(5-A-e) Psilidae, for example, Psila rosae; and
(5-A-f) Tephritidae, for example, Bactrocera cucurbitae and Bactrocera dorsalis of Bactrocera spp.; Rhagoletis cerasi and Rhagoletis pomonella of Rhagoletis spp.; and others such as Ceratitis capitata and Dacus oleae.

(5-B) Nematocera

(5-B-a) Cecidomyiidae, for example, Asphondylia yushimai, Contarinia sorghicola, Mayetiola destructor and Sitodiplosis mosellana.

(6) Orthoptera Pests

(6-a) Acrididae, for example, Schistocerca americana and Schistocerca gregaria of Schistocerca spp.; and others such as Chortoicetes terminifera, Dociostaurus maroccanus, Locusta migratoria, Locustana pardalina, Nomadacris septemfasciata and Oxya yezoensis;
(6-b) Gryllidae, for example, Acheta domestica and Teleogryllus emma;
(6-c) Gryllotalpidae, for example, Gryllotalpa orientalis; and
(6-d) Tettigoniidae, for example, Tachycines asynamorus.

(7) Acari

(7-A) Acaridida of Astigmata

(7-A-a) Acaridae mites, for example, Rhizoglyphus echinopus and Rhizoglyphus robini of Rhizoglyphus spp.; Tyrophagus neiswanderi, Tyrophagus perniciosus, Tyrophagus putrescentiae and Tyrophagus similis of Tyrophagus spp.; and others such as Acarus siro, Aleuroglyphus ovatus and Mycetoglyphus fungivorus;

(7-B) Actinedida of Prostigmata

(7-B-a) Tetranychidae mites, for example, Bryobia praetiosa and Bryobia rubrioculus of Bryobia spp.; Eotetranychus asiaticus, Eotetranychus boreus, Eotetranychus celtis, Eotetranychus geniculatus, Eotetranychus kankitus, Eotetranychus pruni, Eotetranychus shii, Eotetranychus smithi, Eotetranychus suginamensis and Eotetranychus uncatus of Eotetranychus spp.; Oligonychus hondoensis, Oligonychus ilicis, Oligonychus karamatus, Oligonychus mangiferus, Oligonychus orthius, Oligonychus perseae, Oligonychus pustulosus, Oligonychus shinkajii and Oligonychus ununguis of Oligonychus spp.; Panonychus citri, Panonychus mori and Panonychus ulmi of Panonychus spp.; Tetranychus cinnabarinus, Tetranychus evansi, Tetranychus evansi, Tetranychus kanzawai, Tetranychus ludeni, Tetranychus quercivorus, Tetranychus phaselus, Tetranychus urticae and Tetranychus viennensis of Tetranychus spp.; Aponychus corpuzae and Aponychus firmianae of Aponychus spp.; Sasanychus akitanus and Sasanychus pusillus of Sasanychus spp.; Shizotetranychus celarius, Shizotetranychus longus, Shizotetranychus miscanthi, Shizotetranychus recki and Shizotetranychus schizopus of Shizotetranychus spp.; and others such as Tetranychina harti, Tuckerella pavoniformis and Yezonychus sapporensis;
(7-B-b) Tenuipalpidae mites, for example, Brevipalpus lewisi, Brevipalpus obovatus, Brevipalpus phoenicis, Brevipalpus russulus and Brevipalpus californicus of Brevipalpus spp.; Tenuipalpus pacificus and Tenuipalpus zhizhilashviliae of Tenuipalpus spp.; and others such as Dolichotetranychus floridanus;

(7-B-c) Eriophyidae mites, for example, Aceria diospyri, Aceria ficus, Aceria japonica, Aceria kuko, Aceria paradianthi, Aceria tiyingi, Aceria tulipae and Aceria zoysiea of Aceria spp.; Eriophyes chibaensis and Eriophyes emarginatae of Eriophyes spp.; Aculops lycopersici and Aculops pelekassi of Aculops spp.; Aculus fockeui and Aculus schlechtendali of Aculus spp.; and others such as Acaphylla theavagrans, Calacarus carinatus, Colomerus vitis, Calepitrimerus vitis, Epitrimerus pyri, Paraphytoptus kikus, Paracalacarus podocarpi and Phyllocotruta citri;

(7-B-d) Tarsonemidae mites, for example, Tarsonemus bilobatus and Tarsonemus waitei of Tarsonemus spp.; and others such as Phytonemus pallidus and Polyphagotarsonemus latus; and

(7-B-e) Penthaleidae mites, for example, Penthaleus erythrocephalus and Penthaleus major of Penthaleus spp.

The ectoparasites that are targeted for control include parasites that parasitize in the back, armpits, lower abdomen, and inner thighs, etc. of the host animal and inhabit by obtaining nutrients such as blood and dandruff from the animal, and parasites that fly to the back, buttocks, etc. of the host animals and inhabit by obtaining nutrients such as blood and dandruff from the animals. Examples of the ectoparasites include acaris, lice, fleas, mosquitoes, stable flies, flesh flies and the like. Specific examples of the ectoparasites are shown below.

(1) Acari

Acari belonging to the Dermanyssidae family, acari belonging to the Macronyssidae family, acari belonging to the Laelapidae family, acari belonging to the Varroidae family, acari belonging to the Argasidae family, acari belonging to the Ixodidae family, acari belonging to the Psoroptidae family, acari belonging to the Sarcoptidae family, acari belonging to the Knemidokoptidae family, acari belonging to the Demodixidae family, acari belonging to the Trombiculidae family.

(2) Phthiraptera order

Lice belonging to the Haematopinidae family, lice belonging to the Linognathidae family, biting lice belonging to the Menoponidae family, biting lice belonging to the Philopteridae family, and biting lice belonging to the Trichodectidae family.

(3) Siphonaptera order

Fleas belonging to the Pulicidae family, for example, Ctenocephalides canis and Ctenocephalides felis of Ctenocephalides spp.;
Fleas belonging to the Tungidae family, fleas belonging to the Ceratophyllidae family, and fleas belonging to the Leptopsyllidae family.

(4) Hemiptera order

Insects belonging to the Cimicidae, insects belonging to the Reduviidae, insects belonging to the Triatominae.

(5) Harmful organisms of Diptera order

Mosquitoes belonging to the Culicidae family, black flies belonging to the Simuliidae family, punkie belonging to the Ceratopogonidae family, horseflies belonging to the Tabanidae family, flies belonging to the Muscidae family, tsetse flies belonging to the Glossinidae family, flesh flies belonging to the Sarcophagidae family, flies belonging to the Hippoboscidae family, flies belonging to the Calliphoridae family, and flies belonging to the Oestridae family.

In addition to the above-described harmful organisms, the composition of the present invention exhibits a superior effect for controlling other pests that have a sting or venom that can harm humans and animals, pests carrying various pathogens / pathogenic bacteria, and pests that impart a discomforting sensation to humans (such as toxic pests, sanitary insect pests, unpleasant insect pests).

Specific examples thereof are listed below.

(1) Hymenoptera insect pests

Sawflies of the Argidae family, wasps of the Cynipidae family, sawflies of the Diprionidae family, ants of the Formicidae family, wasps of the Mutillidae family, and (2) Other insect pests

Blattodea, termites, Araneae, centipedes, millipedes, crustacea and Cimex lectularius.

Some of the formulation examples of the chemical compositions are shown below. However, the additives and addition ratios are limited to these examples, and can be varied over a wide range. Parts in the formulation examples indicate parts by weight. The active ingredients are the compound A, compound B, compound C, and the compound D in the chemical composition A, chemical composition B, chemical composition C, and the chemical composition D, respectively. In the harmful organism control composition of the present invention, the compound A, compound B, and optionally the compound C are used.

Preperation examples of the agricultural and horticultural formulations are shown below.

| Preparation example 1 | (wettable powder) |
|---|---|
| Active ingredient | 40 parts |
| Diatom earth | 53 parts |
| Fatty alcohol sulfate | 4 parts |
| Alkylnaphthalene sulfonate | 3 parts |

The foregoing was uniformly mixed and finely pulverized to obtain a wettable powder including 40% of active ingredient.

| Preparation example 2 | (emulsion) |
|---|---|
| Active ingredient | 30 parts |
| Xylene | 33 parts |
| Dimethylformamide | 30 parts |
| Polyoxyethylene alkylaryl ether | 7 parts |

The foregoing was mixed and dissolved to obtain an emulsion including 30% of active ingredient.

| Preparation Example 3 | (flowable agent) |
|---|---|
| Active ingredients | 30 parts |
| Polyoxyethylene styryl phenyl ether | 4 parts |
| Alkyl sulfosuccinate | 1 part |
| Alkylene glycol | 5 parts |
| Thickening agent | 20 parts |
| Water | Balance |

The foregoing was mixed to obtain a flowable agent containing 30% of the active ingredient.

| Preparation Example 4 | (flowable agent) |
|---|---|
| Active ingredients | 20 parts |
| Polyoxyethylene tristyryl phenyl ether | 2.5 parts |
| Polyoxyethylene polyoxypropylene alkyl ether | 0.5 parts |
| Thickening agent | 0.6 part |
| Trimethylol propane | 20 parts |
| Alkylene glycol | 5 parts |
| Water | Balance |

The foregoing was mixed to obtain a flowable agent containing 20% of the active ingredient.

The following are the preparation examples for epidemic-prevention and animals.

| Preparation example 5 | (granulated powder) |
|---|---|
| Active ingredient | 5 parts |
| Kaolin | 94 parts |
| White carbon | 1 part |

The active ingredient was dissolved in an organic solvent, and sprayed on a carrier, followed by evaporating the solvent under reduced pressure. This kind of granulated powder may be mixed with animal food.

Preparation example 6  (impregnating agent)
Active ingredient  0.1-1 parts
Peanut oil  balance

The impregnating agent was filter-sterilized by a sterilizing filter after adjustment.

Preparation example 7  (pour-on agent)
Active ingredient  5 parts
Myristic acid ester  10 parts
Isopropanol  balance

Preparation example 8  (spot-on agent)
Active ingredient  10-15 parts
Palmitic acid ester  10 parts
Isopropanol  balance

Preparation example 9  (spray-on agent)
Active ingredient  1 part
Propylene glycol  10 parts
Isopropanol  balance

Next, the effects of the control method of the present invention are shown by carrying out the following the test examples.

[Test Example 1]

Effecacy confirmation test on Tetranychus urticae

Eight or ten adult female Tetranychus urticae mites were inoculated on the kidney bean leaves placed in petri dishes on the day before treating with the chemical solutions.
A flowable agent containing the compound A was diluted with a solution obtained by diluting Rabiden 3S 5,000 times in water to prepare a chemical solution A containing the compound A in which the concentration of the compound A is twice the concentration shown in Tables 1 to 4.
A preparation product containing the compound B was diluted with a solution obtained by diluting Rabiden 3S 5,000 times in water to prepare a chemical solution B containing the compound B in which the concentration of the compound B is twice the concentration shown in Tables 1 to 4.

{Preparation product containing compound B used in Test Examples}

Test number a: Tebufenpyrad: Pyranica EW (manufactured by Nippon Soda Co., Ltd.)
Test numbers b and h: Hexythiazox: Nissolan wettable powder (manufactured by Nippon Soda Co., Ltd.)
Test number c: Fenpyroximate: Danitron flowable (manufactured by Nippon Pesticides Co., Ltd.)
Test number d: Propargite: Omite wettable powder (manufactured by Nippon Pesticides Co., Ltd.)
Test number e: Tolfenpyrad: Hachi-Hachi flowable (manufactured by OAT Agrio)
Test number f: Abamectin: Agrimec (manufactured by Syngenta Japan)
Test number g: Etoxazole: Baroque flowable (manufactured by Kyoyu Agri co., Ltd.)
Test number i: Thiodicarb: Lavin wettable powder 75 (manufactured by Bayer Crop Science)
Test number j: Spinosad: Spinoace granule wettable powder (Kumiai Chemical Industry Co., Ltd.)
Test number k: Isoxathion: Carphos emulsion (manufactured by Nippon Soda Co., Ltd.)
Test number 1: Acetamiprid: Mospilan water-soluble agent (manufactured by Nippon Soda Co., Ltd.)

Test number m: Fipronil: Prince flowable (manufactured by BASF)

Test number n: Tralomethrin: Scout flowable agent (manufactured by Nippon Soda Co., Ltd.)

Test number o: BT agent (live spore of Bacillus thuringiensis and crystal toxin produced): Zentari granule wettable powder (manufactured by Kitako Chemical Industry Co., Ltd.)

Test number p: Buprofezin: Applaud flowable (manufactured by Nippon Pesticides Co., Ltd.)

Test number q: Cyromazine: Triggered liquid (manufactured by Syngenta Japan)

Test number r: Tebufenozide: Romdan Flowable (manufactured by Nippon Soda Co., Ltd.)

Test number s: Flubendiamide: Phoenix granule wettable powder (Nippon Agricultural Co., Ltd.)

Test number t: Pyridalyl: pleo flowable (manufactured by Kyoto Agri)

Test number u: Lufenuron: Match emulsion (manufactured by Syngenta Japan)

Test number v: Flonicamid: Ulala DF (made by Ishihara Bioscience)

Test number w: Chlorfenapyr: Kotetsu Flowable (Nippon Pesticides Co., Ltd.)

Test number x: Indoxacarb: Tornado flowable (made by Kumiai Chemical Industry Co., Ltd.)

Test number y: Diafenthiuron: Gamba wettable powder (manufactured by Syngenta Japan)

Test number z: Thiocyclam: Ebisect wettable powder (manufactured by Mitsui Chemicals Agro)

Test number aa: Emamectin-benzoate: Affirm emulsion (Syndienta Japan)

Test number ab: Pyridaben: Sanmite wettable powder (manufactured by Nissan Chemical Co., Ltd.)

A mixed solution obtained by mixing equal amounts of the chemical solution A and the chemical solution B was sprayed onto a petri dish containing kidney bean leaves inoculated with Tetranychus urticae mites at an amount of 2 mg per $cm^2$ using a rotary spray tower (AB mixed-component area).

The chemical solution A and the chemical solution B were each diluted 2-fold with a solution obtained by diluting Labiden 3S 5000 times in water to obtain a chemical solution A' and a chemical solution B'.

The chemical solution A' was sprayed onto another petri dish containing kidney bean leaves inoculated with Tetranychus urticae mites at an amount of 2 mg per $cm^2$ using a rotary spray tower (A single-component area). Moreover, the chemical solution B' was sprayed onto another petri dish containing kidney bean leaves inoculated with Tetranychus urticae mites at an amount of 2 mg per $cm^2$ using a rotary spray tower (B single-component area).

After that, the petri dishes with the chemical solution sprayed were placed in a temperature-controlled room at a temperature of 25°C and a humidity of 60%. After 3 days from the spraying, the life and death of adult insects were investigated and the corrected adult insect mortality rates were calculated.

$$\text{Corrected adult insect mortality rate (\%)} = (Ta-Ca)/(100-Ca) \times 100$$

Ca: adult insect mortality rate in untreated area after 3 days

Ta: adult insect mortality rate in treated area after 3 days

After completing the life and death investigation of the adult insects, all adult insects were removed. Then, the petri dishes from which the adult insects were removed were placed in a temperature-controlled room at a temperature of 25°C and a humidity of 60%. 10 days after the spraying, the number of the surviving next generation was investigated and the effectiveness was calculated.

$$\text{Effectiveness (\%)} = (Cn-Tn)/Cn \times 100$$

Cn: Number of next-generation survivors in untreated area after 10 days

Tn: Number of next-generation survivors in treated area after 10 days

In order to show the degree of synergistic effect, "expected value of corrected adult insect mortality rate" and "expected value of effectiveness" were calculated based on the Colby method. If the corrected adult insect mortality rate or the effectiveness is larger than the "expected value of corrected adult mortality rate" or the "expected value of effectiveness", respectively, it was determined that there is a synergistic effect.

$$\text{Expected value (E) of corrected adult insect mortality rate (\%) or effectiveness}$$

$$(\%) = X+Y-XY/100$$

X: Measured value of corrected adult insect mortality rate (%) or effectiveness (%) in area B in which the chemical solution was used alone

Y: Measured value of corrected adult insect mortality rate (%) or effectiveness (%) in area A in which the chemical solution was used alone

[Table 1]

| No. | Chemical A | Chemical B | Corrected Adult Insect Mortality Rate | | Effectiveness | |
|-----|-----------|-----------|------------------|------------------|------------------|------------------|
| | | | Measured Value [%] | Expected Value [%] | Measured Value [%] | Expected Value [%] |
| a | acynonapyr 1.6ppm | - | 50 | - | 51 | - |
| | - | tebufenpyrad 100ppm | 50 | - | 64 | - |
| | acynonapyr 1.6ppm | tebufenpyrad 100ppm | 94 | 75 | 92 | 82 |
| b | acynonapyr 1.6ppm | - | 8 | - | 55 | - |
| | - | hexythiazox 12.5ppm | 0 | - | 90 | - |
| | acynonapyr 1.6ppm | hexythiazox 12.5ppm | 38 | 8 | 97 | 95 |
| c | acynonapyr 1.6ppm | - | 38 | - | 27 | - |
| | - | fenpyroximate 50ppm | 19 | - | 28 | - |
| | acynonapyr 1.6ppm | fenpyroximate 50ppm | 50 | 49 | 50 | 48 |
| d | acynonapyr 1.6ppm | - | 38 | - | 27 | - |
| | - | propargite 40ppm | 50 | - | 18 | - |
| | acynonapyr 1.6ppm | propargite 40ppm | 100 | 69 | 71 | 40 |
| e | acynonapyr 1.6ppm | - | 13 | - | 19 | - |
| | - | tolfenpyrad150ppm | 0 | - | 4 | - |
| | acynonapyr 1.6ppm | tolfenpyrad150ppm | 19 | 13 | 30 | 22 |
| f | acynonapyr 1.6ppm | - | 13 | - | 19 | - |
| | - | abamectin 0.017ppm | 0 | - | 11 | - |
| | acynonapyr 1.6ppm | abamectin 0.017ppm | 19 | 13 | 48 | 28 |

(continued)

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| g | acynonapyr 1.6ppm | - | 13 | - | 30 | - |
| | - | etoxazole 1.6ppm | 0 | - | 85 | - |
| | acynonapyr 1.6ppm | etoxazole 1.6ppm | 33 | 13 | 92 | 89 |
| h | acynonapyr 1.6ppm | - | 72 | - | 40 | - |
| | - | hexythiazox 1.6ppm | 13 | - | 42 | - |
| | acynonapyr 1.6ppm | hexythiazox 1.6ppm | 95 | 75 | 78 | 65 |

[Table 2]

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| i | acynonapyr 2.0ppm | - | 0 | - | 49 | - |
| | - | thiodicarb 750ppm | 0 | - | 0 | - |
| | acynonapyr 2.0ppm | thiodicarb 750ppm | 0 | 0 | 60 | 49 |
| j | acynonapyr 2.0ppm | - | 0 | - | 49 | - |
| | - | spinosad 40ppm | 0 | - | 0 | - |
| | acynonapyr 2.0ppm | spinosad 40ppm | 0 | 0 | 61 | 49 |
| k | acynonapyr 2.0ppm | - | 0 | - | 51 | - |
| | - | isoxathion 500ppm | 47 | - | 50 | - |
| | acynonapyr 2.0ppm | isoxathion 500ppm | 87 | 47 | 100 | 76 |
| l | acynonapyr 2.0ppm | - | 0 | - | 51 | - |
| | - | acetamiprid 100ppm | 0 | - | 7 | - |
| | acynonapyr 2.0ppm | acetamiprid 100ppm | 73 | 0 | 89 | 55 |

(continued)

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| m | acynonapyr 2.0ppm | - | 0 | - | 60 | - |
| | - | fipronil 22ppm | 0 | - | 2 | - |
| | acynonapyr 2.0ppm | fipronil 22ppm | 22 | 0 | 62 | 61 |
| n | acynonapyr 2.0ppm | - | 0 | - | 60 | - |
| | - | tralomethrin 9.3ppm | 0 | - | 1 | - |
| | acynonapyr 2.0ppm | tralomethrin 9.3ppm | 0 | 0 | 79 | 60 |
| o | acynonapyr 2.0ppm | - | 0 | - | 49 | - |
| | - | BT agent[1] 100ppm | 0 | - | 3 | - |
| | acynonapyr 2.0ppm | BT agent[1] 100ppm | 0 | 0 | 57 | 50 |
| 1) Live spore of Bacillus thuringiensis and crystal toxin produced. | | | | | | |

[Table 3]

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| p | acynonapyr 2.0ppm | - | 0 | - | 60 | - |
| | - | buprofezin 200ppm | 0 | - | 17 | - |
| | acynonapyr 2.0ppm | buprofezin 200ppm | 0 | 0 | 68 | 67 |
| q | acynonapyr 2.0ppm | - | 0 | - | 60 | - |
| | - | cyromazine 87ppm | 0 | - | 8 | - |
| | acynonapyr 2.0ppm | cyromazine 87ppm | 11 | 0 | 78 | 62 |

(continued)

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| r | acynonapyr 2.0ppm | - | 0 | - | 60 | - |
| | - | tebufenozide 200ppm | 0 | - | 10 | - |
| | acynonapyr 2.0ppm | tebufenozide 200ppm | 0 | 0 | 91 | 64 |
| s | acynonapyr 2.0ppm | - | 0 | - | 60 | - |
| | - | flubendiamide 100ppm | 0 | - | 3 | - |
| | acynonapyr 2.0ppm | flubendiamide 100ppm | 0 | 0 | 74 | 61 |
| t | acynonapyr 2.0ppm | - | 0 | - | 60 | - |
| | - | pyridalyl 100ppm | 0 | - | 11 | - |
| | acynonapyr 2.0ppm | pyridalyl 100ppm | 0 | 0 | 84 | 64 |
| u | acynonapyr 2.0ppm | - | 0 | - | 60 | - |
| | - | lufenuron 100ppm | 0 | - | 14 | - |
| | acynonapyr 2.0ppm | lufenuron 100ppm | 22 | 0 | 89 | 65 |
| v | acynonapyr 2.0ppm | - | 20 | - | 68 | - |
| | - | flonicamid 100ppm | 0 | - | 3 | - |
| | acynonapyr 2.0ppm | flonicamid 100ppm | 30 | 20 | 69 | 69 |

[Table 4]

| No. | Chemical A | Chemical B | Corrected Adult Insect Mortality Rate | | Effectiveness | |
|---|---|---|---|---|---|---|
| | | | Measured Value [%] | Expected Value [%] | Measured Value [%] | Expected Value [%] |
| w | acynonapyr 2.0ppm | - | 20 | - | 68 | - |
| | - | chlorfenapyr 50ppm | 20 | - | 46 | - |
| | acynonapyr 2.0ppm | chlorfenapyr 50ppm | 50 | 36 | 97 | 83 |
| x | acynonapyr 2.0ppm | - | 20 | - | 68 | - |
| | - | indoxacarb 50ppm | 0 | - | 0 | - |
| | acynonapyr 2.0ppm | indoxacarb 50ppm | 70 | 20 | 99 | 68 |
| y | acynonapyr 2.0ppm | - | 20 | - | 46 | - |
| | - | diafenthiuron 25ppm | 50 | - | 7 | - |
| | acynonapyr 2.0ppm | diafenthiuron 25ppm | 40 | 60 | 38 | 49 |
| z | acynonapyr 2.0ppm | - | 20 | - | 46 | - |
| | - | thiocyclam 500ppm | 40 | - | 18 | - |
| | acynonapyr 2.0ppm | thiocyclam 500ppm | 50 | 52 | 45 | 55 |
| aa | acynonapyr 2.0ppm | - | 20 | - | 46 | - |
| | - | emamectin-benzoate 0.02ppm | 40 | - | 17 | - |
| | acynonapyr 2.0ppm | emamectin-benzoate 0.02ppm | 60 | 52 | 80 | 55 |
| ab | acynonapyr 2.0ppm | - | 20 | - | 46 | - |
| | - | pyridaben 200ppm | 10 | - | 0 | - |
| | acynonapyr 2.0ppm | pyridaben 200ppm | 30 | 28 | 68 | 46 |

As shown in the test examples, when the compound A and the compound B were applied to the object, a synergistic effect was exhibited. The harmful organism control method of the present invention and the harmful organism control composition of the present invention can control harmful organisms such as insects and acaris safely with a smaller amount.

**Claims**

**1.**   A harmful organism control method, comprising applying 3-endo-[2-propoxy-4-(trifluoromethyl)phenoxy]-9-[5-(trifluoromethyl)-2-pyridyloxy]-9-azabicyclo[3.3.1]nonane to an object in combination with an insecticidal or acaricidal active ingredient.

2. The control method according to claim 1, wherein the insecticidal or acaricidal active ingredient is an active ingredient of an insecticidal or acaricidal agent having an action mechanism classified by the IRAC code.

3. The control method according to claim 1, wherein the insecticidal or acaricidal active ingredient is at least one selected from the group consisting of (1) acetylcholinesterase inhibitor, (2) GABA-gated chloride ion channel blocker, (3) sodium channel modulator, (5) nicotinic acetylcholine receptor allosteric modulator, (6) glutamate-gated chloride ion channel allosteric modulator, (7) juvenile hormone analogs, (8) other non-specific (multi-site) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor channel blocker, (15) chitin biosynthesis inhibitor type 0, (16) chitin biosynthesis inhibitor type 1, (17) diptera insect molting inhibitor, (18) molting hormone receptor agonist, (19) octopamine receptor agonist, (20) mitochondrial electron transport chain complex III inhibitor, (21) mitochondrial electron transport chain complex I inhibitor, (22) voltage-dependent sodium channel blocker, (23) acetyl CoA carboxylase inhibitor, (24) mitochondrial electron transport chain complex IV inhibitor, (25) mitochondrial electron transport chain complex II inhibitor, (28) ryanodine receptor modulator, (29) chordotonal organ modulator, (30) GABA-gated chloride ion (chlorine ion) channel allosteric modulator, and (UN) agent with unclear action mechanism.

4. The control method according to claim 1, wherein the insecticidal or acaricidal active ingredient is at least one selected from the group consisting of

alanycarb, aldicarb, bendiocarb, benfuracarb, butocarboxim, butoxycarboxim, carbaryl, carbofuran, carbosulfan, fenobucarb, formetanate, isoprocarb, methiocarb, methomyl, oxamyl, pirimicarb, propoxur, thiodicarb, thiofanox, triazamate, trimethacarb, xylylcarb, fenothiocarb, MIPC, aldoxycarb, allyxycarb, aminocarb, bufencarb, cloethocarb, promecarb;

acephate, azamethiphos, azinphos-ethyl, azinphos-methyl, cadusafos, chlorethoxyfos, chlorfenvinphos, chlormephos, chlorpyrifos, coumaphos, cyanophos, demeton-S-methyl, diazinon, dicrotophos, dimethoate, disulfoton, EPN, famphur, fenamiphos, fenitrothion, fenthion, fosthiazate, heptenophos, imicyafos, isocarbophos, isoxathion, malathion, mecarbam, methamidophos, methidathion, mevinphos, naled, omethoate, oxydemetonmethyl, parathion, parathion-methyl, phenthoate, phorate, phosmet, phosphamidon, phoxim, pirimiphos-methyl, profenofos, propetamphos, prothiofos, sulfotep, tebupirimfos, temephos, terbufos, tetrachlorvinphos, thiometon, triazophos, trichlorfon, bromophos-ethyl, carbophenothion, cyanofenphos, demeton-S-methyl sulfone, dialifos, dichlofenthion, dioxabenzofos, fensulfothion, flupyrazofos, fonofos, fosmethilan, isazofos, jodfenphos, methacrifos, pirimiphos-ethyl, phosphocarb, prothoate;

acetoprole, chlordane, endosulfan, ethiprole, fipronil, pyrafluprole, pyriprole, camphechlor, heptachlor, dienochlor;

acrinathrin, d-cis-trans-allethrin, d-trans allethrin, bifenthrin, bioallethrin, bioallethrin S-cyclopentyl isomer, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ξ-cypermethrin, cyphenothrin [(1R)-trans isomer], δ-methrin, empenthrin [(EZ)-(1R)-isomer], esfenvalerate, etofenprox, fenpropathrin, fenvalerate, flucythrinate, flumethrin, taufluvalinate, imiprothrin, kadethrin, permethrin, phenothrin [(1R)-trans isomer], prallethrin, pyrethrum, silafluofen, tefluthrin, tetramethrin, tetramethrin [(1R)-isomer], tralomethrin, transfluthrin, allethrin, pyrethrins, pyrethrin I, pyrethrin II, profluthrin, dimefluthrin, bioethanomethrin, biopermethrin, transpermethirn, fenfluthrin, fenpirithrin, flubrocythrinate, flufenprox, metofluthrin, protrifenbute, pyresmethrin, terallethrin, meperfluthrin, tetramethylfluthrin;

acetamiprid, clothianidin, dinotefuran, imidacloprid, nitenpyram, nithiazine, thiacloprid, thiamethoxam, sulfoxaflor, nicotine, flupyradifurone, triflumezopyrim;

spinetoram, spinosad;

abamectin, emamectin-benzoate, lepimectin, milbemectin, ivermectin, selamectin, doramectin, eprinomectin, moxidectin, milbemycin, milbemycin oxime;

hydroprene, kinoprene, methoprene, fenoxycarb, pyriproxyfen, diofenolan, epofenonane, triprene;

chloropicrin, sulfuryl fluoride, borax, tartar emetic, metam-sodium;

pymetrozine, pyrifluquinazon, afidopyropen;

clofentezine, diflovidazin, hexythiazox, etoxazole;

Bacillus thuringiensis subsp. Israelensis, Bacillus sphaericus, Bacillus thuringiensis subsp. Aizawai, Bacillus thuringiensis subsp. Kurstaki, Bacillus thuringiensis subsp. Tenebrionis, Bt crop protein: CrylAb, CrylAc, CrylFa, CrylA. 105, Cry2Ab, Vip3A, mCry3A, Cry3Ab, Cry3Bb, Cry34Ab1/Cry35Ab1;
diafenthiuron, propargite, tetradifon;
chlorfenapyr, sulfluramid, DNOC, binapacryl, dinobuton, dinocap;
bensultap, cartap hydrochloride, nereistoxin; thiosultap-sodium, thiocyclam;
bistrifluron, chlorfluazuron, diflubenzuron, flucycloxuron, flufenoxuron, lufenuron, novaluron, noviflumuron, teflubenzuron, triflumuron, buprofezin, fluazuron;
cyromazine;
chromafenozide, halofenozide, methoxyfenozide, tebufenozide;
amitraz, demiditraz, chlordimeform;
acequinocyl, fluacrypyrim, hydramethylnon, bifenazate;
fenazaquin, fenpyroximate, pyrimidifen, pyridaben, tebufenpyrad, tolfenpyrad, rotenone;
indoxacarb, metaflumizone;
spirodiclofen, spiromesifen, spirotetramat, spiropidion;
aluminum phosphide, calcium phosphide, phosphine, zinc phosphide, cyanide;
cyenopyrafen, cyflumetofen, pyflubumide;
chlorantraniliprole, cyantraniliprole, flubendiamide, cyclaniliprole, tetraniliprole;
flonicamid;
broflanilidek, fluxametamide;
azadirachtin, pyridalyl, metaldehyde, dicyclanil, fenoxacrim, fentrifanil, flubenzimine, metoxadiazone, sodium oleate, flometoquin, flufiprole, tralopyril, methylneodecanamide, fluralaner, afoxolaner, dicloromezotiaz, and oxazosulfyl.

5. The control method according to claim 1, wherein the insecticidal or acaricidal active ingredient is a hexythiazox or an etoxazole.

6. The control method according to any one of claims 1 to 5, wherein the harmful organism is an insect or an acari.

7. A harmful organism control composition, comprising 3-endo-[2-propoxy-4-(trifluoromethyl)phenoxy]-9-[5-(trifluoromethyl)-2-pyridyloxy]-9-azabicyclo[3.3.1]nonane and an insecticidal or acaricidal active ingredient.

8. The harmful organism control composition according to claim 7, wherein the insecticidal or acaricidal active ingredient is an active ingredient of an insecticidal or acaricidal agent having an action mechanism classified by the IRAC code.

9. The harmful organism control composition according to claim 7, wherein the insecticidal or acaricidal active ingredient is at least one selected from the group consisting of (1) acetylcholinesterase inhibitor, (2) GABA-gated chloride ion channel blocker, (3) sodium channel modulator, (5) nicotinic acetylcholine receptor allosteric modulator, (6) glutamate-gated chloride ion channel allosteric modulator, (7) juvenile hormone analogs, (8) other non-specific (multi-site) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor channel blocker, (15) chitin biosynthesis inhibitor type 0, (16) chitin biosynthesis inhibitor type 1, (17) diptera insect molting inhibitor, (18) molting hormone receptor agonist, (19) octopamine receptor agonist, (20) mitochondrial electron transport chain complex III inhibitor, (21) mitochondrial electron transport chain complex I inhibitor, (22) voltage-dependent sodium channel blocker, (23) acetyl CoA carboxylase inhibitor, (24) mitochondrial electron transport chain complex IV inhibitor, (25) mitochondrial electron transport chain complex II inhibitor, (28) ryanodine receptor modulator, (29) chordotonal organ modulator, (30) GABA-gated chloride ion (chlorine ion) channel allosteric modulator, and (UN) agent with unclear action mechanism.

10. The harmful organism control composition according to claim 7, wherein the insecticidal or acaricidal active ingredient is at least one selected from the group consisting of

alanycarb, aldicarb, bendiocarb, benfuracarb, butocarboxim, butoxycarboxim, carbaryl, carbofuran, carbosulfan, fenobucarb, formetanate, isoprocarb, methiocarb, methomyl, oxamyl, pirimicarb, propoxur, thiodicarb, thiofanox, triazamate, trimethacarb, xylylcarb, fenothiocarb, MIPC, aldoxycarb, allyxycarb, aminocarb, bufencarb, cloethocarb, promecarb;
acephate, azamethiphos, azinphos-ethyl, azinphos-methyl, cadusafos, chlorethoxyfos, chlorfenvinphos, chlormephos, chlorpyrifos, coumaphos, cyanophos, demeton-S-methyl, diazinon, dicrotophos, dimethoate, disulfoton, EPN, famphur, fenamiphos, fenitrothion, fenthion, fosthiazate, heptenophos, imicyafos, isocarbophos, isoxathion, malathion, mecarbam, methamidophos, methidathion, mevinphos, naled, omethoate, oxydemeton-methyl, parathion, parathion-methyl, phenthoate, phorate, phosmet, phosphamidon, phoxim, pirimiphos-methyl, profenofos, propetamphos, prothiofos, sulfotep, tebupirimfos, temephos, terbufos, tetrachlorvinphos, thiometon, triazophos, trichlorfon, bromophos-ethyl, carbophenothion, cyanofenphos, demeton-S-methyl sulfone, dialifos, dichlofenthion, dioxabenzofos, fensulfothion, flupyrazofos, fonofos, fosmethilan, isazofos, jodfenphos, methacrifos, pirimiphos-ethyl, phosphocarb, prothoate;

acetoprole, chlordane, endosulfan, ethiprole, fipronil, pyrafluprole, pyriprole, camphechlor, heptachlor, dienochlor;

acrinathrin, d-cis-trans-allethrin, d-trans allethrin, bifenthrin, bioallethrin, bioallethrin S-cyclopentyl isomer, bioresmethrin, cycloprothrin, cyfluthrin, β-cyfluthrin, cyhalothrin, λ-cyhalothrin, γ-cyhalothrin, cypermethrin, α-cypermethrin, θ-cypermethrin, θ-cypermethrin, ξ-cypermethrin, cyphenothrin [(1R)-trans isomer], δ-methrin, empenthrin [(EZ)-(1R)-isomer], esfenvalerate, etofenprox, fenpropathrin, fenvalerate, flucythrinate, flumethrin, tau-fluvalinate, imiprothrin, kadethrin, permethrin, phenothrin [(1R)-trans isomer], prallethrin, pyrethrum, silafluofen, tefluthrin, tetramethrin, tetramethrin [(1R)-isomer], tralomethrin, transfluthrin, allethrin, pyrethrins, pyrethrin I, pyrethrin II, profluthrin, dimefluthrin, bioethanomethrin, biopermethrin, transpermethirn, fenfluthrin, fenpirithrin, flubrocythrinate, flufenprox, metofluthrin, protrifenbute, pyresmethrin, terallethrin, meperfluthrin, tetramethylfluthrin;

acetamiprid, clothianidin, dinotefuran, imidacloprid, nitenpyram, nithiazine, thiacloprid, thiamethoxam, sulfoxaflor, nicotine, flupyradifurone, triflumezopyrim;

spinetoram, spinosad;

abamectin, emamectin-benzoate, lepimectin, milbemectin, ivermectin, selamectin, doramectin, eprinomectin, moxidectin, milbemycin, milbemycin oxime;

hydroprene, kinoprene, methoprene, fenoxycarb, pyriproxyfen, diofenolan, epofenonane, triprene;

chloropicrin, sulfuryl fluoride, borax, tartar emetic, metam-sodium;

pymetrozine, pyrifluquinazon, afidopyropen;

clofentezine, diflovidazin, hexythiazox, etoxazole;

Bacillus thuringiensis subsp. Israelensis, Bacillus sphaericus, Bacillus thuringiensis subsp. Aizawai, Bacillus thuringiensis subsp. Kurstaki, Bacillus thuringiensis subsp. Tenebrionis, Bt crop protein: CrylAb, CrylAc, CrylFa, CrylA. 105, Cry2Ab, Vip3A, mCry3A, Cry3Ab, Cry3Bb, Cry34Ab1/Cry35Ab1;

diafenthiuron, propargite, tetradifon;

chlorfenapyr, sulfluramid, DNOC, binapacryl, dinobuton, dinocap;

bensultap, cartap hydrochloride, nereistoxin; thiosultap-sodium, thiocyclam;

bistrifluron, chlorfluazuron, diflubenzuron, flucycloxuron, flufenoxuron, lufenuron, novaluron, noviflumuron, teflubenzuron, triflumuron, buprofezin, fluazuron;

cyromazine;

chromafenozide, halofenozide, methoxyfenozide, tebufenozide;

amitraz, demiditraz, chlordimeform;

acequinocyl, fluacrypyrim, hydramethylnon, bifenazate;

fenazaquin, fenpyroximate, pyrimidifen, pyridaben, tebufenpyrad, tolfenpyrad, rotenone;

indoxacarb, metaflumizone;

spirodiclofen, spiromesifen, spirotetramat, spiropidion;

aluminum phosphide, calcium phosphide, phosphine, zinc phosphide, cyanide;

cyenopyrafen, cyflumetofen, pyflubumide;

chlorantraniliprole, cyantraniliprole, flubendiamide, cyclaniliprole, tetraniliprole;

flonicamid;

broflanilidek, fluxametamide;

azadirachtin, pyridalyl, metaldehyde, dicyclanil, fenoxacrim, fentrifanil, flubenzimine, metoxadiazone, sodium oleate, flometoquin, flufiprole, tralopyril, methylneodecanamide, fluralaner, afoxolaner, dicloromezotiaz, and oxazosulfyl.

**11.** The harmful organism control composition according to claim 7, wherein the insecticidal or acaricidal active ingredient is a hexythiazox or an etoxazole.

**12.** The harmful organism control composition according to any one of claims 7 to 11, wherein the harmful organism is an insect or an acari.

**EP 3 766 349 A1**

## INTERNATIONAL SEARCH REPORT

International application No.

PCT/JP2019/008802

### A. CLASSIFICATION OF SUBJECT MATTER
Int.Cl. see extra sheet
According to International Patent Classification (IPC) or to both national classification and IPC

### B. FIELDS SEARCHED

Minimum documentation searched (classification system followed by classification symbols)
Int.Cl.  A01N43/56,  A01N37/28,  A01N41/02,  A01N41/10,  A01N43/22,
         A01N43/32,  A01N43/36,  A01N43/40,  A01N43/58,  A01N43/68,
         A01N43/76,  A01N43/88,  A01N43/90,  A01N47/02,  A01N47/24,
         A01N47/30,  A01N47/34,  A01N47/38,  A01N47/40,  A01N53/08,
         A01N57/16, A01N63/02, A01P7/02, A01P7/04

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| X | WO 2017/195734 A1 (NIPPON SODA CO., LTD.) 16 November 2017, claims, paragraphs [0026]-[0034], examples (Family: none) | 1-12 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 May 2019 (23.05.2019) | 04 June 2019 (04.06.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/008802

C (Continuation). DOCUMENTS CONSIDERED TO BE RELEVANT

| Category* | Citation of document, with indication, where appropriate, of the relevant passages | Relevant to claim No. |
|---|---|---|
| X | WO 2011/105506 A1 (NIPPON SODA CO., LTD.) 01 September 2011, paragraphs [0154]-[0160], table 1, examples & US 2012/0309964 A1, paragraphs [0242]-[0303], p. 25, test examples & US 2012/0289700 A1 & WO 2011/078081 A1 & EP 2540719 A1 & EP 2518069 A1 & AU 2011221128 A & CA 2789645 A & SG 182761 A & AP 3214 A & CN 102770430 A & KR 10-2012-0112809 A & EA 201201033 A | 1-12 |
| X | JP 2013-241352 A (NIPPON SODA CO., LTD.) 05 December 2013, table 1, paragraphs [0099]-[0115], examples (Family: none) | 1-12 |
| P, X<br>P, A | WO 2018/234478 A1 (BASF SE) 27 December 2018 (Family: none) | 1-3, 6-9, 12<br>4-5, 10-11 |

Form PCT/ISA/210 (continuation of second sheet) (January 2015)

**INTERNATIONAL SEARCH REPORT**

International application No.

PCT/JP2019/008802

CLASSIFICATION OF SUBJECT MATTER
A01N43/56(2006.01)i,      A01N37/28(2006.01)i,      A01N41/02(2006.01)i,
A01N41/10(2006.01)i,      A01N43/22(2006.01)i,      A01N43/32(2006.01)i,
A01N43/36(2006.01)i,      A01N43/40(2006.01)i,      A01N43/58(2006.01)i,
A01N43/68(2006.01)i,      A01N43/76(2006.01)i,      A01N43/88(2006.01)i,
A01N43/90(2006.01)i,      A01N47/02(2006.01)i,      A01N47/24(2006.01)i,
A01N47/30(2006.01)i,      A01N47/34(2006.01)i,      A01N47/38(2006.01)i,
A01N47/40(2006.01)i,      A01N53/08(2006.01)i,      A01N57/16(2006.01)i,
A01N63/02(2006.01)i, A01P7/02(2006.01)i, A01P7/04(2006.01)i

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045236 A
- JP 2013241352 A

- WO 2011078081 A1